# EUROPEAN PATENT APPLICATION

(11) **EP 4 583 501 A1**
(43) Date of publication of application: **09.07.2025**
(21) Application number: 23875056.6
(22) Date of filing: 29.08.2023
(51) Int. Cl.: H04M 1/72454, H04M 1/02, G06F 3/041, G06F 3/0484, G06F 3/0481

(54) **SCREEN PROVIDING METHOD AND ELECTRONIC DEVICE SUPPORTING SAME**

(30) Priority: 04.10.2022 KR 20220126158; 21.10.2022 KR 20220136736
(71) Applicant: Samsung Electronics Co., Ltd., Suwon-si, Gyeonggi-do 16677 (KR)
(72) Inventor: SEO, Minsu, Suwon-si Gyeonggi-do 16677 (KR); SUH, Sukwon, Suwon-si Gyeonggi-do 16677 (KR); KIM, Sangheon, Suwon-si Gyeonggi-do 16677 (KR); LIM, Yeunwook, Suwon-si Gyeonggi-do 16677 (KR)
(74) Representative: Walaski, Jan Filip
(86) International application number: PCT/KR2023/012806
(87) International publication number: WO 2024/075987

(57) **Abstract**

The present disclosure provides a screen providing method for a foldable electronic device and an electronic device supporting same, the method comprising the operations of: detecting an angle between a first housing and a second housing of the f oldable electronic device or an angle change; when the angle or the angle change is equal to or greater than a designated angle, extracting multiple objects included in spec ific content among multiple pieces of content stored in a memory; and changing the depth of field of at least one object among the extracted multiple objects according to the angle or the angle change, so as to output the depth of field differently from a previous display state. Various other embodiments identified through the specification are possible.

## Description

### BACKGROUND

### 1. Field

The disclosure relates to a method for providing a screen of an electronic device.

### 2. Description of Related Art

A portable electronic device may include a display to output a screen resulting from driving. The display may be disposed on one surface (e.g., a front surface) of the portable electronic device, and may output at least one screen based on operations for various functions of the portable electronic device. For example, the display may output a communication-related screen based on the operation for a communication function of the portable electronic device. The communication-related screen may include a screen, such as a voice call screen, a video conference screen, or an Internet access screen.

The portable electronic device may be limited in size due to portability. Accordingly, even the size of the display may be limited to a portable size. The display which is portable may display only a limited screen, which makes a user feel uncomfortable. To enhance the limited screen, conventionally, an electronic device foldable has been sold in a market. As the foldable-type electronic device is provided with a display foldable, the foldable-type electronic device may be provided with a display region larger than a display region of a bar-type electronic device.

### SUMMARY

Aspects of the disclosure are to address at least the above-mentioned problems and/or disadvantages and to provide at least the advantages described below.

In accordance with one aspect of the disclosure, a foldable electronic device may include a first housing and a second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, and at least one processor operatively connected to the at least one sensor and the memory. A foldable electronic device may be included in which at least one processor may detect an angle or angle change between the first housing and the second housing, extract a plurality of objects from a specific content among the plurality of contents stored in the memory when the angle or the angle change is equal to or greater than a specific angle, and change a depth of field of at least one object of the plurality of objects extracted, based on the angle or the angle change, such that the at least one object is displayed to be different from a previous display state.

In accordance with another aspect of the disclosure, a method for providing a screen of a foldable electronic device, may include an operation for detecting an angle and an angle change between a first housing and a second housing, an operation for extracting a plurality of objects from a specific content of the plurality of contents stored in the memory when the angle or the angle change is equal to or greater than a specific angle, and an operation for changing a depth of field of at least one object of the plurality of objects extracted, based on the angle or the angle change, such that the at least one object is displayed to be different from a previous display state.

### BRIEF DESCRIPTION OF THE DRAWINGS

Fig. 1 is a block diagram illustrating an electronic device 101 in a network environment 100 according to various embodiments.
FIG. 2 is a view illustrating a first-type electronic device employing a home screen technology adjusted depending on angle information, according to an embodiment of the disclosure;
FIG. 3 is a view illustrating a second-type electronic device employing a home screen technology adjusted depending on angle information, according to an embodiment of the disclosure;
FIG. 4 is a view illustrating a third-type electronic device employing a home screen technology adjusted depending on angle information, according to an embodiment of the disclosure;
FIG. 5 is a view illustrating a configuration related to a screen display control based on an angle change of a foldable electronic device according to an embodiment;
FIG. 6 is a view illustrating a configuration related to a screen display control based on an angle change of a foldable electronic device, according to an embodiment;
FIG. 7 is a view illustrating a configuration related to a screen display control based on an angle change of a wearable electronic device, according to an embodiment;
FIG. 8 is a view illustrating a configuration related to a screen display control based on an angle change of a foldable electronic device, according to an embodiment;
FIG. 9 is a view illustrating an example of a method for operating a foldable electronic device related to providing a screen, according to an embodiment;
FIG. 10 is a view illustrating another example of a method for operating a foldable electronic device related to providing a screen, according to an embodiment;
FIG. 11 is a view illustrating an example of separating objects of an image, according to an embodiment;
FIG. 12 is a view illustrating an example of changing depth of field of a content screen based on an angle change, according to an embodiment;
FIG. 13 is a view illustrating an example of a zoom change of a content screen based on an angle change, according to an embodiment;
FIG. 14 is a view illustrating an example of changing a sequence of layers of a content screen based on an angle change according to an embodiment;
FIG. 15 is a view illustrating an example of changing a sequence of layers of a content screen and of applying a zoom ratio of a content screen based on an angle change according to an embodiment;
FIG. 16 is a view illustrating an example of changing a sequence of layers of a content screen and of changing depth of field of a content screen based on an angle change, according to an embodiment;
FIG. 17 is a view illustrating another example of a function for changing a screen based on an angle change, according to an embodiment;
FIG. 18 is a view illustrating an example related to replacing at least some objects based on an angle change, according to an embodiment;
FIG 19 is a view illustrating an example related replacing at least some objects based on an angle change, according to an embodiment;
FIG. 20 is a view illustrating an example of changing a screen based on an angle change of an auxiliary display, according to an embodiment; and
FIG. 21 is a view illustrating an example of obtaining a changed angle value from an external electronic device according to an embodiment.

In the following description made with respect to the accompanying drawings, similar components will be assigned with similar reference numerals.

### DETAILED DESCRIPTION

Hereinafter, the disclosure discloses an operation of a screen of a foldable electronic device including a foldable display. To use the foldable display of the foldable electronic device, the foldable electronic device in a folded state needs to be changed to be in an unfolded state. Alternatively, the foldable electronic device in the unfolded state needs to be changed to be in the folded state, to store and carry the foldable electronic device. The disclosure supports that a user to keep getting interested in using the foldable electronic device by providing useful information to the user, increasing a concentration on a screen by the user, and providing an interesting factor to the user, in the process of changing the state of the foldable electronic device from the folded state to the unfolded state or from the unfolded state to the folded state. In addition, the disclosure suggests an embodiment for collecting an angle change of another electronic device, such as a wearable electronic device, changeable in angle and providing a screen change based on the collected angle change, by being inspired in detecting an angle change (e.g., an angle change between a plurality of housings), as the state of the foldable electronic device is changed.

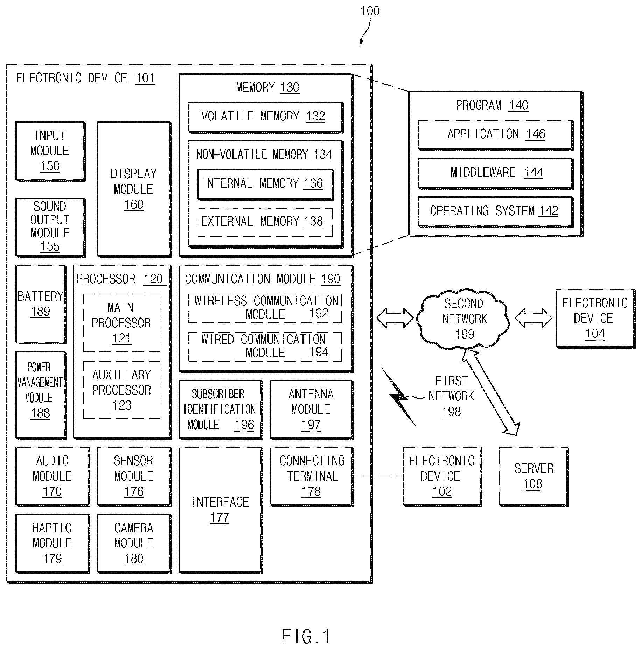

Fig. 1 is a block diagram illustrating an electronic device 101 in a network environment 100 according to various embodiments. Fig. 1 may correspond to a device configuration of at least one of a portable electronic device, a foldable electronic device, or a wearable electronic device to which the present disclosure applies.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

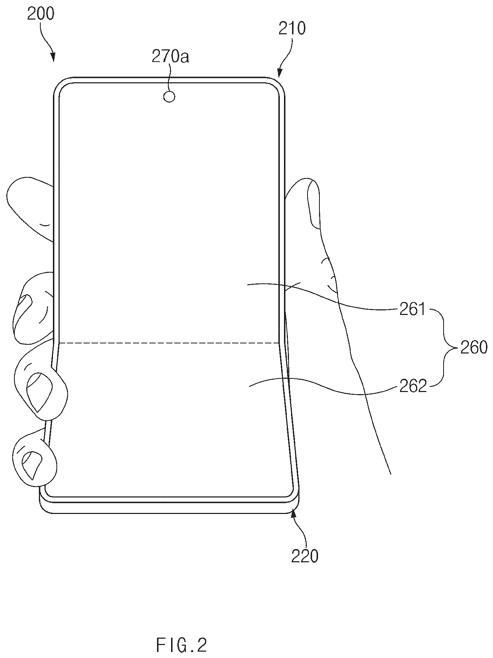

FIG. 2 is a view illustrating a first-type electronic device employing a home screen technology adjusted depending on angle information, according to an embodiment of the disclosure.

Referring to FIG. 2, according to an embodiment, a first-type electronic device 200 may include a first housing 210 (or a first housing part), a second housing 220 (or a second housing part), and a flexible display 260 (or a display). According to an embodiment, although the first-type electronic device 200 may further include a first camera 270a, the first camera 270a may be omitted. According to an embodiment, the first-type electronic device 200 may include the flexible display 260 having the shape in which a length is longer in a vertical direction rather than a horizontal direction, based on drawing. The first-type electronic device 200 may further include at least one hinge structure (or a hinge part, or a hinge module) to couple the first housing 210 to the second housing 220 to perform an operation for vertically folding the first housing 210 and the second housing 220 about a virtual folding region 21 (or a virtual folding line). The hinge structure may couple the first housing 210 to the second housing 220, and may support the first housing 210 and the second housing 220 such that an included angle between the first housing 210 and the second housing 220 is maintained at a specific angle. The first housing 210 and the second housing 220 may have a folded state (e.g., the state that a first display region 261 and a second display region 262 of the flexible display 260 are disposed to face each other) and an unfolded state (e.g., the state that the first display region 261 and the second display region 262 of the flexible display 260 are disposed to face the same direction) about the hinge structure. Alternatively, the first housing 210 and the second housing 220 may maintain a specific angle. For example, the first housing 210 and the second housing 220 may be maintain a position in which a 30°, 45°, 90°, 130° or 150° (e.g., flex mode, tent mode, free-stop hinge mode) is formed between the first housing 210 and the second housing 220.

The first-type electronic device 200 may include at least some components among the first housing 210, the second housing 220, and the flexible display 260, which are described above, and components of the electronic device 100 described with reference to FIG. 1. For example, the first-type electronic device 200 may include at least one sensor module (or a sensor part or a sensor; the sensor module 176 will be employed in the following description) corresponding to the sensor module 176, at least one processor (the processor 120 will be employed in the following description) corresponding to the processor 120, and at least one memory (the "memory 130" will be employed in the following description) corresponding to the memory 130. The sensor module 176 may sense the folded state or the unfolded state of the first housing 210 and the second housing 220 and the state of a specific mounting angle between the folded state (e.g., 0°) and the unfolded state (e.g., 180°) to collect angle information. The processor 120 of the first-type electronic device 200 may change at least a portion of an image, which is output through a home screen (or a background screen or a locking screen) to be output to the flexible display 260, depending on the angle information collected by the sensor module 176. The at least a portion of the image, which is output through the home screen to be output to the flexible display 260, may be, for example, a still image or a moving picture. The processor 120 may additionally change the at least a portion of the image, which is output through the home screen, or may output a changed image to the home screen, when the angle information is updated. According to an embodiment, the home screen may be output in the form of one image throughout the first display region 261 and the second display region 262 of the flexible display 260, or may be output in the form of images mutually different from each other on the first display region 261 and the second display region 262. As described in the disclosure, the changing of the image output to the home screen depending on the angle information may be applied to, for example, at least a portion of an image output throughout the entire portion of the first display region 261 and the second display region 262. As described in the disclosure, the changing of the image output to the home screen depending on the angle information may be applied to only at least one image of images output to each of the first display region 261 or the second display region 262.

According to an embodiment, the processor 120 may select at least one image satisfying a specific condition, from the memory 139, which stores at least one image to be output the flexible display 260, when the angle information is collected, and may output a plurality of objects included in the selected image. According to an embodiment, the processor 120 may extract a background object and a specific object other than the background object, from the image. The processor 120 may adjust a depth of field of at least some objects among the plurality of objects extracted, depending on the angle information. According to an embodiment, the processor 120 may change the sequence of at least some layers among layers corresponding to the plurality of objects extracted. According to an embodiment, the processor 120 may adjust a zoom ratio of at least some objects among the plurality of objects extracted, depending on the angle information. According to an embodiment, the processor 120 may remove (or by gradually scaling down or by increasing the number of objects to be removed) at least some of the remaining objects from the home screen based on angle information while changing at least some of the objects among the extracted plurality of objects.

Based on the above-described operation, the first-type electronic device 200 may change the at least some objects on the home screen while the first-type electronic device 200 performs an unfolding operation in a folded state, or performs a folding operation in an unfolded state, thereby making a user interested while making the user concentrate on information needed to be validated or information of interest by the user.

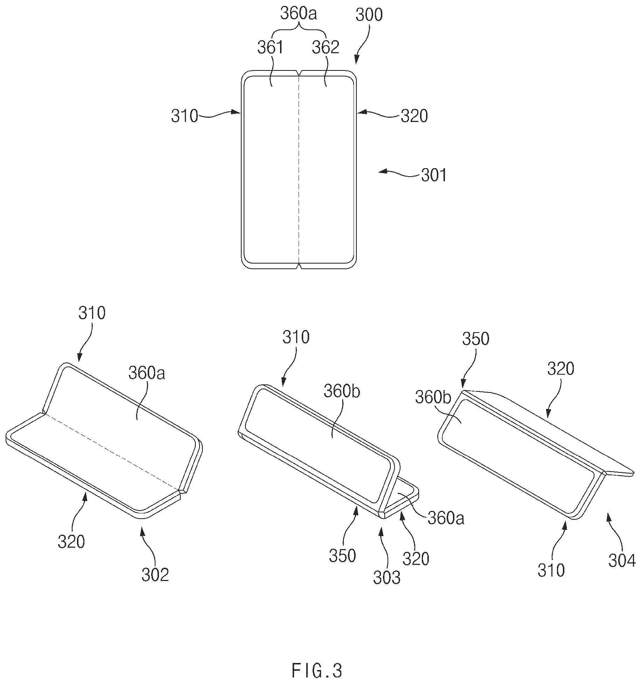

FIG. 3 is a view illustrating a second-type electronic device employing a home screen technology adjusted depending on angle information, according to an embodiment of the disclosure.

Referring to FIG. 3, according to an embodiment, a second-type electronic device 300 may include a first housing 310, a second housing 320, a first display 360a (or a main display), and a second display 360b (or an auxiliary display). According to an embodiment, the second-type electronic device 300 may include the first display 360a foldable left or right about a virtual folding line 31 extending in the vertical direction, based on the drawing. The second display 360b may be disposed in a direction opposite to a direction of the first housing 310 (or the second housing 320) in which the first display 360a is disposed. The second-type electronic device 300 may further include at least one hinge structure 350 (or a hinge part, or a hinge module) configured to couple the first housing 310 to the second housing 320 to perform an operation for folding the first housing 310 and the second housing 320 laterally about the virtual folding line 31. The hinge structure 350 may couple the first housing 310 to the second housing 320, and may support the first housing 310 and the second housing 320 such that an included angle between the first housing 310 and the second housing 320 is maintained at a specific angle. The hinge structure 350 may include, for example, at least one hinge module and a hinge housing to surround the hinge module. Even the hinge structure of the first-type electronic device 200 described above with reference to FIG. 2 may include a hinge housing and at least one hinge module.

The second-type electronic device 300 may include at least some components among the first housing 310, the second housing 320, the first display 360a, and the second display 360b, which are described above, and components of the electronic device 100 described with reference to FIG. 1. For example, the second-type electronic device 300 may include at least one sensor module (or a sensor part or a sensor; the sensor module 176 will be employed in the following description) corresponding to the sensor module 176, at least one processor (the processor 120 will be employed in the following description) corresponding to the processor 120, and at least one memory (the memory 130 will be employed in the following description) corresponding to the memory 130. The second-type electronic device 300 may employ a home screen adjusting function depending on the angle information, which will be actually described in the disclosure, except that the second-type electronic device 300 is different from the first-type electronic device 200 described with reference to FIG. 2 in a folding direction, an outer appearance, and the size of the display. For example, the second-type electronic device 300 may include the processor 120 to adjust a home screen depending on the angle information, through an operation identical to or similar to the operation of the processor 120 of the first-type electronic device 200 illustrated in FIG. 2. Similarly to the second-type electronic device 300, the first-type electronic device 200 may further include an auxiliary display disposed in at least a portion of a front surface for the flexible display and a rear surface (e.g., the first housing 210 or the second housing 220) opposite to the front surface.

The first display 360a may include the first display region 361 and the second display region 362, and the first display region 361 and the second display region 362 may be connected to each other through the virtual folding line 31. According to an embodiment, the first display 360a may output one image throughout the first display region 361 and the second display region 362. According to an embodiment, the first display 360a may output mutually different images to the first display region 361 and the second display region 362, respectively. The processor 120 of the second-type electronic device 300 may adjust, depending on the angle information, the change of at least some objects among the plurality of objects included in one image output throughout the first display 360a. According to an embodiment, a first image including a plurality of objects may be output to the second display 360b, and the first image may be changed to correspond to the angle information. When the angle information of the second-type electronic device 300 indicates at least a specific angle (e.g., 30 °), the second display 360b stops the output of the first image (or is turned off), and the first display 360a may output a second image depending on the angle information while outputting the second image changed based on the angle change.

According to an embodiment, as illustrated in FIG. 3, the second-type electronic device 300 may maintain various mounting angles. According to an embodiment, the second-type electronic device 300 may have an unfolded state 301, a first-angle mounting state 302 (an angle of 120° formed between the first housing 310 and the second housing 320), a second-angle mounting state 303 (an angle of 45° formed between the first housing 310 and the second housing 320), and a third-angle mounting state 304 (an angle of 90° formed between the first housing 310 and the second housing 320). In addition, the second-type electronic device 300 may maintain more various mounting angles. When receiving angle information corresponding to various mounting angle states 301, 302, 303, and 304, the processor 120 of the second-type electronic device 300 may adjust the change of at least some objects among objects of an image output to the home screen, depending on angle information.

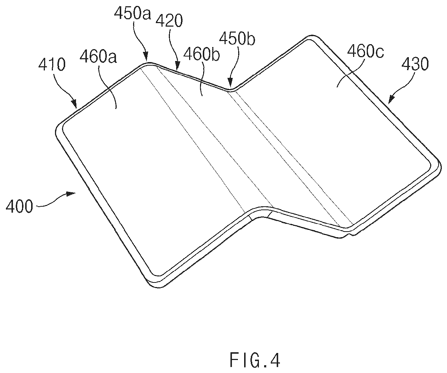

FIG. 4 is a view illustrating a third-type electronic device employing a home screen technology adjusted depending on angle information, according to an embodiment of the disclosure.

Referring to FIG. 4, according to an embodiment, a third-type electronic device 400 may include a first housing 410, a second housing 420, a third housing 430, a first hinge structure 450a, a second hinge structure 450b, a first display 460a, a second display 460b, and a third display 460c. According to an embodiment, at least two among the first display 460a, the second display 460b, and the third display 460c may be coupled to each other. For example, the first display 460a may be coupled to the second display 460b, or the second display 460b may be coupled to the third display 460c. The first display 460a and the second display 460b may have an out-folding state in which the first display 460a and the second display 460b are folded out about the first hinge structure 450a. In the out-folding state, the first display 460a and the second display 460b may be disposed to face in directions opposite to each other. The second display 460b and the third display 460c may have an in-folding state in which the second display 460b and the third display 460c are folded in about the second hinge structure 450b. In the in-folding state, the second display 460b and the third display 460c may be disposed to face each other. As the third-type electronic device 400 performs an operation (in-folding operation) related to the in-folding state and an operation (out-folding operation) related to the out-folding state, the first display 460a is disposed toward the front surface, the third-type electronic device 400 may be folded in a z shape.

According to an embodiment, the third-type electronic device 400 may include at least one sensor provided at one side of the first hinge structure 450a and the second hinge structure 450b, or an inner side of the first housing 410, the second housing 420, and the third housing 430 to detect the folding of an electronic device. The at least one sensor may detect the angle change resulting from, for example, the in-folding operation. In addition, the at least one sensor may detect the angle change resulting from the out-folding operation. The at least one sensor may correspond to the sensor module 176 described with reference to FIG. 1, and the third-type electronic device 400 may include at least one processor (the processor 120 will be employed in the following description) corresponding to the processor 120 described with reference to FIG. 1, and at least one memory (the memory 130 will be employed in the following description) corresponding to the memory 130. The third-type electronic device 400 may employ a home screen adjusting function depending on the angle information, which is described in the disclosure, which is similar to the first-type electronic device 200 or the second-type electronic device 300 described with reference to FIG. 2 or 3. For example, a changed angle value received from the sensor module 160 including the at least one sensor may be transmitted to the processor 120 disposed in the third-type electronic device 400, and the processor 120 of the third-type electronic device 400 may change at least a portion of the home screen output to the first display 460a, the second display 460b, and the third display 460c depending on the changed angle value. According to an embodiment, the processor 120 of the third-type electronic device 400 may output a plurality of objects, which are included in an image output on the first display 460a and the second display 460b, to have different depths of field, corresponding to the out-folding operation. Alternatively, the processor 120 of the third-type electronic device 400 may output a plurality of objects, which are included in an image output on the second display 460b and the third display 460c, to have different depths of field, corresponding to the in-folding operation. The home screen output to the second display 460b may output an image changed corresponding to the out-folding state or the in-folding state, or may output a fixed image regardless of the out-folding state or the in-folding state. Alternatively, as a display region of the second display 460b is divided into a plurality of display regions, some display regions may output a screen changed corresponding to the out-folding state, together with the first display 460a, and remaining display regions may output a screen changed corresponding to the in-folding state together with the third display 460c.

As described above, a function for changing and outputting at least a portion of an image, which is output to a display to correspond to a changed angle value of an electronic device according to the disclosure, may not be limited by the size of housings, the coupling shape of the housings, or the number of the housings, or the number of displays or the shape of the displays.

At least one sensor of the electronic device described with reference to FIGS. 1 to 4 may include, for example, at least one of a gyro sensor, an acceleration sensor, a grip sensor, a hall sensor serving as a hinge event collecting sensor, or a bezel rotating detecting sensor.

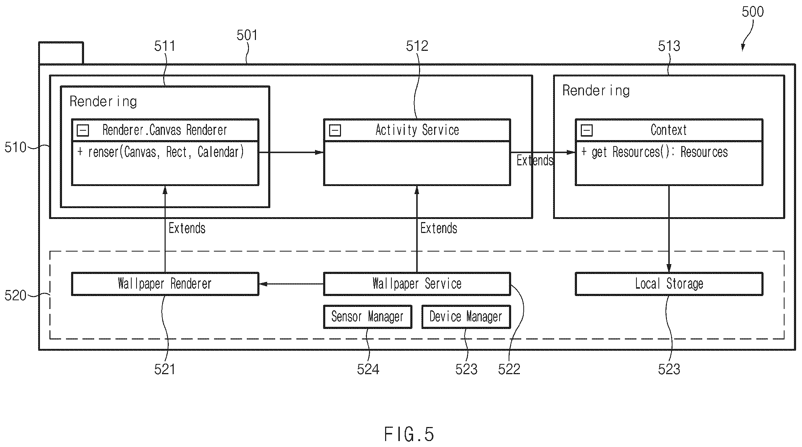

FIG. 5 is a view illustrating a configuration related to a screen display control based on an angle change of a foldable electronic device, according to an embodiment. Before description, a foldable electronic device 500 described with reference to FIG. 5 may correspond to at least one of electronic devices described with reference to FIGS. 1 to 4. Referring to FIG. 5, the foldable electronic device 500 may include, for example, at least one processor 501 (e.g., the processor 120 described with reference to FIG. 1) related to a screen control of a display (e.g., at least one display of the displays of FIGS. 1 to 4; the display 160 will be employed in the following description). The at least one processor 501 may include a first processor 510 to process data output to the display 160 and a second processor 520 to perform signal processing related to the control of the home screen. In this case, at least one of the first processor 510 and the second processor 520 may be implemented in form of a hardware processor or a software module.

The first processor 510 may perform rendering for a home screen image to be output to the display 160 based on information received from the second processor 520. In this connection, the first processor 510 may include a first rendering module 511, an activity module 512, and a resource processing module 513.

The activity module 512 (or activity service module), which serves as a main service module for the configuration of a screen, may process an operation performed corresponding to data management or a user input. According to an embodiment, the activity module 512 may receive a home screen image and information about a changed angle value from a home screen service module 522 of the second processor 520, and may generate (synthesize) an image obtained by applying the changed angle value to the home screen image, or may control to generate the image. In this operation, when the home screen service module 522 provides a memory address value of an image to be used for the home screen, the activity module 512 may transmit a request for an image to be used for the home screen to a memory controller 523 through the resource processing module 513, and may obtain the image to be used for the home screen from the memory. The activity module 512 may transmit the home screen image and the changed angle value to the first rendering module 511. Alternatively, the activity module 512 may generate a home screen image changed as an angle is changed, and may transmit the generated image to the first rendering module 511. In addition, the activity module 512 may request a home screen renderer 521 of the second processor 520 to generate the home screen image based on the angle change. When receiving a request for the output of the home screen from the home screen renderer 521 of the second processor 520, the first rendering module 511 may perform rendering for the home screen image changed based on the changed angle value received from the activity module 512, and may output a home screen image, which is rendered, to the display 160.

The second processor 520 may include, for example, a first sensor manager 524, a first device manager 525, a home screen service module 522, a home screen renderer 521, and the memory controller 523. At least a portion of the first sensor manager 524, the first device manager 525, the home screen renderer 521, and the memory controller 523 may be provided in the form of a hardware component or a software module.

The first sensor manager 524 may control at least one sensor, which is disposed in the foldable electronic device 500, to be activated and deactivated. According to an embodiment, the first sensor manager 524 may control to supply power to a sensor (e.g., a hall sensor), which collects an angle value changed in the process for folding or unfolding of a plurality of housings included in the foldable electronic device 500, and control to operate the sensor.

The first device manager 525 may collect information about the sensor or information about a battery, which is obtained from the electronic device (e.g., the foldable electronic device 500) and may transmit the collected information to at least one of the activity module 512 or the home screen service module 522. According to an embodiment, the first device manager 525 may collect sensing information from at least one sensor driven by the first sensor manager 524. According to an embodiment, the first device manager 525 may collect a changed angle value of the foldable electronic device 500, from a sensor which collects the changed angle value. The first device manager 525 may transmit the collected changed angle value to the activity module 512 of the processor 510 and the home screen service module 522.

The home screen service module 522 may identify the changed angle value received from the first device manager 525, may request the home screen renderer 521 to output the home screen when the changed angle value is equal to or greater than a specific value, which is previously defined, and may guide the activity module 512 such that the activity module 512 outputs to the home screen. The home screen service module 522 may transmit information about an address for a home screen image, which is to be output to the display, and the changed angle value, to the activity module 512, in the operation for guiding the output of the home screen. In this process, the home screen service module 522 may obtain an address value for at least one image (e.g., a still image or a moving picture), which is to be output to the home screen, from the memory of the foldable electronic device, in a rule previously defined, and may transmit the address value to the activity module 512.

The memory controller 523 may control a device (e.g., a memory) to store an image or resources necessary for screen configuration, and may obtain the image or the resources necessary for the screen configuration. According to an embodiment, the memory controller 523 may support the home screen service module 522 such that the home screen service module 522 selects the address value for the image to be used for the home screen. For example, when receiving a request for providing the address value for the image to be used for the home screen, the memory controller 523 may provide the address value for the specific image, which is previously defined, to the home screen service module 522, or may select any one image of a plurality of images to be used for the home screen, randomly or in a previously defined condition, and may provide an address value for the selected image to the home screen service module 522.

The home screen renderer 521 may receive the image to be used for the home screen and the changed angle value from the home screen service module 522, and may apply received values to generate (or synthesize) a home screen image changed as an angle is changed. In this operation, the home screen renderer 521 may output a plurality of objects included in the image, may re-arrange the plurality of objects corresponding to the changed angle value, and may generate a home screen image based on the changed angle. The home screen renderer 521 may transmit the home screen image generated based on the angle change, to the first processor 510.

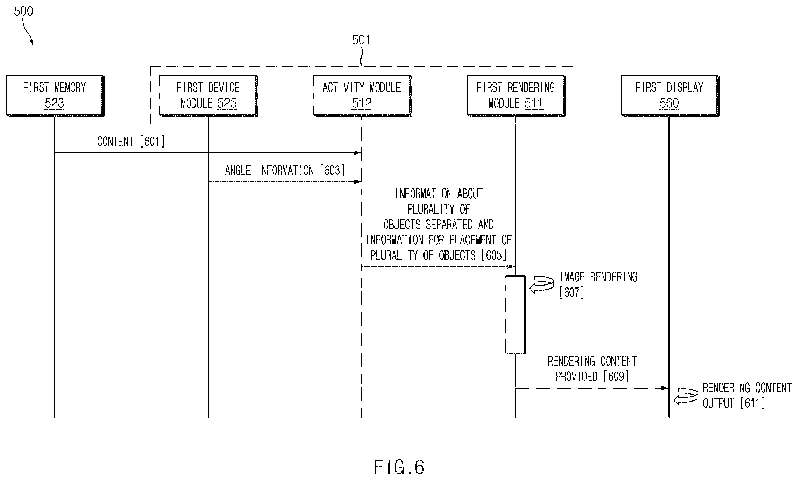

Meanwhile, although the above description has been made regarding operations for processing data by the first processor 510 and the second processor 520 while the home screen image is generated based on the angle change and output, the disclosure is not limited thereto. For example, the foldable electronic device 500 may include only a configuration in which when the angle change (or an included angle change between housings) is collected through the first device manager 525, and transmitted to the activity module 512, the activity module 512 obtains an image to be used for the home screen, generates a home screen image changed as the angle is changed, and transmits the home screen image to the first rendering module 511 or the home screen renderer 521 such that a rendering operation is performed with respect to the home screen image, and then outputs the image to the display 160. The details thereof will be described with reference to FIG. 6.

FIG. 6 is a view illustrating a configuration related to a screen display control based on an angle change of a foldable electronic device, according to an embodiment. The configuration of the foldable electronic device illustrated in FIG. 6 includes a portion of a processor configuration of the foldable electronic device of FIG. 5 related to outputting the home screen image. The illustrated configuration may be substituted with a different configuration described with reference to FIG. 5 or may be divided into a sub-configuration.

Referring to FIGS. 5 and 6, in operation 531, a first memory 523a of the foldable electronic device 500 may transmit a content to be used for the home screen image to the activity module 512, under a specific condition. For example, the access to the first memory 523a may be made under the control of the memory controller 523 described above with reference to FIG. 5 and the first memory 523a may provide at least one home screen image. The activity module 512 may correspond to the activity module 512 described with reference to FIG. 5. The first memory 523a may transmit an image previously defined, or an image randomly selected to the activity module 512, when the angle change, which is collected by the first device manager 525 described with reference to FIG. 5, is equal to or greater than a specific value. Alternatively, the first memory 523a may transmit the image to be used for the home screen to the activity module 512, when the first display 560 (e.g., the displays 160, 260, 360a, 360b, 460a, 460b, and 460c described with reference to FIGS. 1 to 5) is changed from a turn-off state to a turn-on state.

In operation 533, the first device manager 525 may transmit angle information to the activity module 512. In this case, the first device manager 525 may receive a changed angle value from a sensor (or the first sensor manager 524 of FIG. 5) to detect the angle change in the foldable electronic device 500.

In operation 535, the activity module 512 may transmit information about a plurality of objects separated and information about the placement of the plurality of objects to the first rendering module 511. In this connection, the activity module 512 may extract the plurality of objects included in the home screen, and may re-arrange depths of field of the plurality of objects extracted, corresponding to the angle information. Alternatively, the activity module 512 may transmit, to the first rendering module 511, the plurality of objects, information about the depths of the field of the plurality of objects, or information about the sequence of a plurality of layers, in which the plurality of objects are disposed.

In operation 537, the first rendering module 511 may perform a rendering operation for the received multiple pieces of information. For example, the first rendering module 511 may apply the depths of field of the plurality of objects to generate (or synthesize) the home screen image, which is processed (rendered) through the rendering operation, to be output to the first display 560. In this case, the home screen image processed through the rendering operation may refer an image obtained by changing the depths of field or the layers of at least some objects, based on the changed angle value, that is, an image different from an original image stored in the first memory 523a.

In operation 539, the first rendering module 511 may provide a content, which is rendered, to the first display 560. For example, the rendered content may be stored in a frame memory of the first display 560. In operation 541, the first display 560 may output the rendered content.

Some operations of operation 531 to 541 described above may be consecutively performed corresponding to the change of an angle of the foldable electronic device 500. Alternatively, operation 531 may be performed only once for a specific time to select the home screen image or before an event for replacing a specific home screen image, and at least some operations among operation 533 to operation 541 described above may be consecutively performed corresponding to the change of the angle of the foldable electronic device 500.

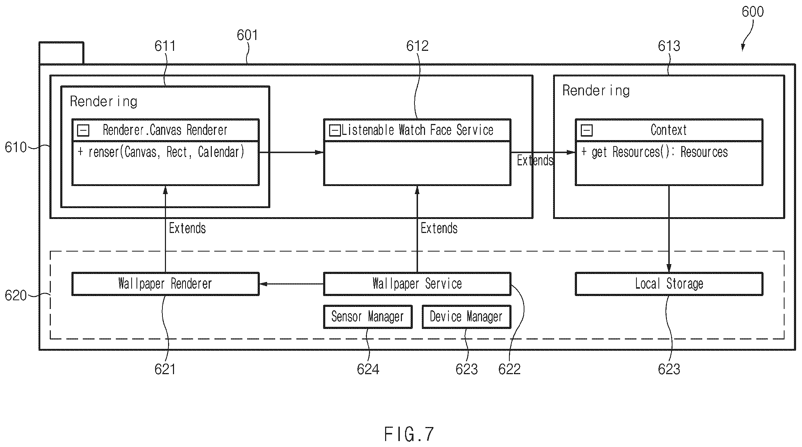

FIG. 7 is a view illustrating a configuration related to a screen display control based on an angle change of a wearable electronic device, according to an embodiment.

Referring to FIG. 7, a wearable electronic device 600 may include, for example, at least one processor 120 (e.g., the processor 120 described with reference to FIG. 1) related to the control of a screen of a display (e.g., the display 160 (e.g., the display 160 of FIG. 1; the display 160 will be employed in the following description) of FIG. 1. The at least one processor 120 may include a first processor 610 to process data output to the display 160 and a second processor 620 to perform signal processing related to the control of a watch screen. In this case, at least one of the first processor 610 or the second processor 620 may be implemented in form of a hardware processor or a software module.

The first processor 610 may perform a rendering operation for a watch screen image to be output to the display 160 based on information received from the second processor 620. In this connection, the first processor 610 may include a second rendering module 611, a watch service module 612, and a resource processing module 613. The watch service module 612 may receive information about a watch screen image and information about a changed angle value from the second processor 620, and may generate an image which is obtained by applying the changed angle value to the watch screen image, or control to generate the image. In this operation, the watch service module 612 may request a memory controller 623 to provide an image to be used for the watch screen through the resource processing module 613 and obtain the image. The watch screen image may be stored in an external electronic device, which is linked to the wearable electronic device 600, instead of being stored in the wearable electronic device 600. In this case, the resource processing module 613 may request the memory controller 623 to obtain the watch screen image stored in the external electronic device, in response to the request of the watch service module 612. The watch service module 612 may transmit the watch screen image and the changed angle value to the second rendering module 611. Alternatively, the watch service module 612 may generate a watch screen image changed based on the changed angle, and may transmit the generated image to the second rendering module 611. In addition, the watch service module 612 may request a watch screen renderer 621 of the second processor 620 to generate the watch screen image based on the changed angle. The second rendering module 611 may receive the watch screen image changed based on the changed angle value. When receiving the watch screen image, the second rendering module 611 may perform a rendering operation for the received watch screen image and may output a watch screen image, which is rendered, to the display 160.

The second processor 620 may include, for example, a second sensor manager 624, a second device manager 625, a watch screen service module 622, a watch screen renderer 621, and a memory controller 623. At least a portion of the second sensor manager 624, the second device manager 625, the watch screen service module 622, the watch screen renderer 621, and the memory controller 623 may be provided in the form of a hardware component or a software module.

The second sensor manager 624 may manage the operation of at least one sensor included in the wearable electronic device 600. For example, the second sensor manager 614 may manage a sensor to detect a rotating angle of a bezel rotatably provided in the wearable electronic device 600.

The second device manager 625 may receive a changed angle value corresponding to the rotation of the bezel of the wearable electronic device 600, from the second sensor manager 624. The second device manager 625 may transmit the received changed angle value to the watch screen service module 622 or the watch service module 612.

According to an embodiment, at least some of the watch screen service module 622, the watch screen renderer 621, and the memory controller 623 may be components the same as or similar to components of the home screen service module 522, the home screen renderer 521, and the memory controller 523 described above in FIG. 5. Accordingly, at least one of the watch screen service module 622, the watch screen renderer 621, or the memory controller 623 may have a role and a function of each of the components described above with reference to FIG. 5. For example, the watch screen service module 622 may control to apply the changed angle value, which is received from the second device manager 625, to the change of the home screen image, and the watch screen renderer 621 may process the generation of the home screen image changed.

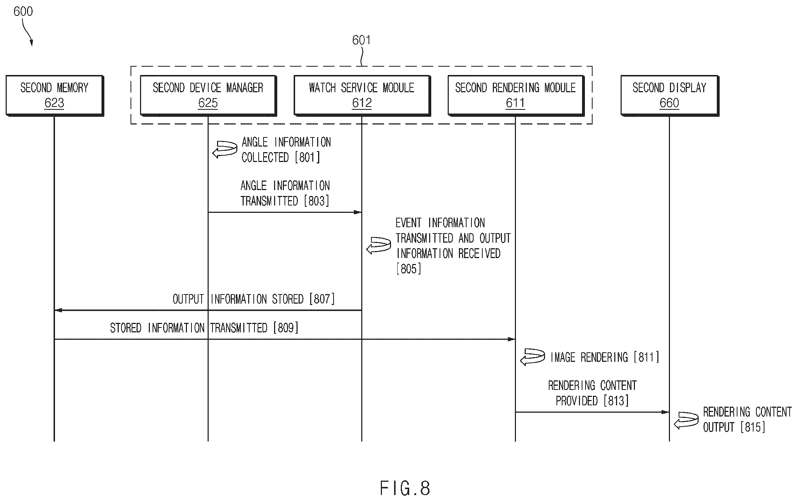

Meanwhile, although the above description has been made regarding operations for processing data by the first processor 610 and the second processor 620 and the watch screen image is generated and output based on the changed angle of the wearable electronic device 600, the disclosure is not limited thereto. For example, the watch electronic device 600 may include only a configuration in which when the angle change (or an included angle change between housings) is collected through the second device manager 625, and transmitted to the watch service module 612, the watch service module 612 obtains an image to be used for the watch screen, generates a watch screen image changed as the angle is changed, and transmits the watch screen image to the second rendering module 611 or the watch screen renderer 621 such that the rendering operation is performed with respect to the watch screen image, and then outputs the image to the display 160. The details thereof will be described with reference to FIG.8.

FIG. 8 is a view illustrating a configuration related to a screen display control based on an angle change of a foldable electronic device, according to an embodiment. The configuration of the wearable electronic device illustrated in FIG. 8 includes a partial configuration of a processor configuration of the wearable electronic device of FIG. 7 related to outputting the watch screen image. The illustrated configuration may be substituted with a different configuration described with reference to FIG. 7 or may be separated into a sub-configuration.

Referring to FIGS. 7 and 8, in operation 801, the second device manager 625 of the wearable electronic device 600 may collect angle information. In this connection, the second device manager 625 may receive the angle information from the second sensor manager 624 to sense the angle change of the wearable electronic device 600. The second device manager 625 may transmit the collected angle information to the watch service module 612 in operation 803.

The watch service module 612 may process transmitting information about an event and receiving output information in operation 805. The information about the event may indicate a situation that the changed angle value of the wearable electronic device 600 is equal to or greater than a specific value. The wearable electronic device 600 may receive, from the external electronic device, the output information, such as a watch screen image, to be output on the second display 660 (e.g., at least one of displays described with reference to FIGS. 1 to 7). In this connection, the wearable electronic device 600 may form a communication channel with the external electronic device. When receiving the information to be output through the second display 660 from the external electronic device, the watch service module 612 may control to store the output information received in operation 807 to the second memory 623. The second memory 623 may transmit the information, which is stored in operation 809, to the second rendering module 611. The stored information may include output information received in the watch service module 612 from the external electronic device. In the above-described operation, the watch service module 612 may directly transmit the output information to the second rendering module 611, instead of transmitting the output information to the second memory 623. In addition, according to an embodiment, the watch service module 612 may store the output information in the second memory 623 while transmitting the output information to the second rendering module 611. According to an embodiment, information transmitted after stored in the second memory 623 or the output information transmitted by the watch service module 612 may include angle information.

In operation 811, the second rendering module 611 may perform a rendering operation for an image. In this operation, the second rendering module 611 may extract a plurality of objects from the received image, may adjust the depths of field of the extracted objects to be different values corresponding to the angle information to generate an image (e.g., the watch screen image) changed. The second rendering module 611 may transmit a content rendered to the second display 660 in operation 813, after the rendering operation is completed. Alternatively, the second rendering module 611 may store the rendered content to the frame memory.

In operation 815, the second display 660 may output the rendered content. The rendered content output to the second display 660 may include an image obtained by changing an original image to correspond to the changed angle of the wearable electronic device 600.

As described above, the function for outputting the screen image according to an embodiment of the disclosure may detect the changed angle of the wearable electronic device 600, apply the changed angle to an image stored in the wearable electronic device 600 or the image received from the external electronic device, generate the changed image (or by synthesizing the plurality of objects), and output the changed image to the second display 660.

According to an embodiment, an operation for selecting the image output to the second display 660 may be performed once for a time previously defined, or may be performed once depending on user settings. When the image output to the second display 660 is fixed, the wearable electronic device 600 may change the image received in the second rendering module 611, based on the angle information received from the second device manager 625 to update the image, and may output the image to the second display 600.

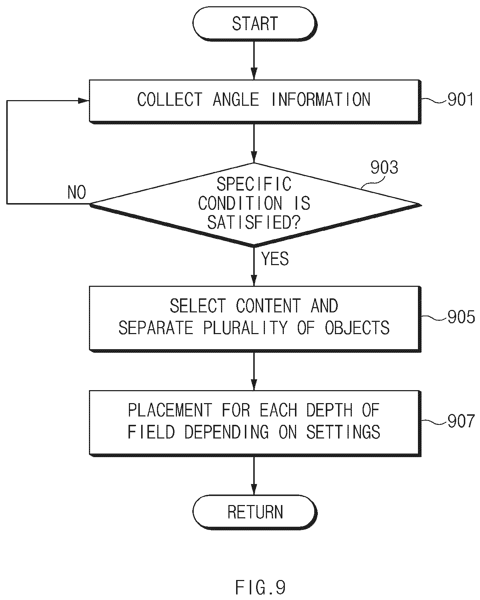

FIG. 9 is a view illustrating an example of a method for operating a foldable electronic device related to providing a screen according to an embodiment.

Referring to FIG. 9, according to an embodiment, related to the method for operating the foldable electronic device according to an embodiment, the processor 120 (e.g., a processor included in electronic devices of FIGS. 1 to 8; the processor 120 will be employed in the following description) of a foldable electronic device (e.g., any one of the electronic devices described with reference to FIGS. 1 to 8; the foldable electronic device 200 will be employed in the following description) may collect angle information in operation 901. In this connection, the processor 120 may activate a sensor (e.g., the sensor module of FIG. 1; for example, a hall sensor) to detect the change of an included angle between a plurality of housings of the foldable electronic device 200, may collect sensing information resulting from the operation of the sensor in a specific period, and may extract a value corresponding to the changed angle.

In operation 903, the processor 120 may determine whether a specific condition is satisfied. For example, the processor 120 may determine whether the changed angle value, which is collected, is equal to or greater than a specific size previously defined. In this connection, the processor 120 may determine whether a changed value of sensing information, which is collected for a specific time, is equal to or greater than a specific size. When the specific condition fails to be satisfied, the processor 120 may branch to an operation which precedes operation 901 and may execute subsequent operations again. For example, the processor 120 may maintain a previous state, when the change of the included angle of the foldable electronic device 200 is not increased to at least a specific angle (e.g., 5°). Alternatively, the processor 120 may determine whether the included angle of the foldable electronic device 200 is increased to at least a specific angle (e.g., 5°). When the included angle between the housings of the foldable electronic device 200 is less than the specific angle, the processor 120 may control to maintain the display in the turn-off state and may maintain operation 901, without separately controlling a screen output function.

When the specific condition is satisfied, the processor 120 may select a content and separate a plurality of objects in operation 905. In this operation, the processor 120 may select at least one image (e.g., a still image or a moving picture) stored in the memory 130 (e.g., the memories included in the electronics of FIGS. 1 to 8; the memory 130 will be employed in the following description) under the specific condition. For example, the processor 120 may select or receive a specific image content selected through a user input. Alternatively, the processor 120 may randomly select at least one image from among a plurality of specific images stored in a specific folder (e.g., a gallery). Alternatively, the processor 120 may select or receive a specific image which is provided from a server providing a content and selected through the user select or randomly. The processor 120 may analyze an image, when the image is selected or received, and extract a plurality of objects from the image. For example, the processor 120 may extract a background object and an object of at least one subject (e.g., a person, an animal, a specific thing, or a specific text) other than the background object, from the image.

In operation 907, the processor 120 may perform placement based on each depth of field depending on settings, with respect to the image, in which the plurality of objects are separated. For example, the processor 120 may apply angle information to some objects of the plurality of objects and may change the depth of field (or a focus) of those objects. According to an embodiment, the processor 120 may increase the depth of field of the background object (e.g., the burr degree of the background object is increased), as the angle information is increased. Alternatively, the processor 120 may decrease the depth of field of the background object (e.g., sharpness of the background object is increased), as the angle information is increased. The processor 120 may form (or synthesize) an image by placing the background object having the changed depth of field on a floor layer, and placing the subject object on the background object. The processor 120 may display the image on the display 160 (e.g., at least one display of displays described with reference to FIGS. 1 to 8; the display 160 will be employed in the following description) when the placement for each depth of field is completed.

After outputting the image as the placement for the depth of field depending on settings is completed, the processor 120 may branch to an operation which precedes operation 901 and may execute subsequent operations again. Operation 901 to operation 907 may be performed until the power of the foldable electronic device 200 is turned off, or until a setting input for requesting to terminate a relevant function through a user input is received.

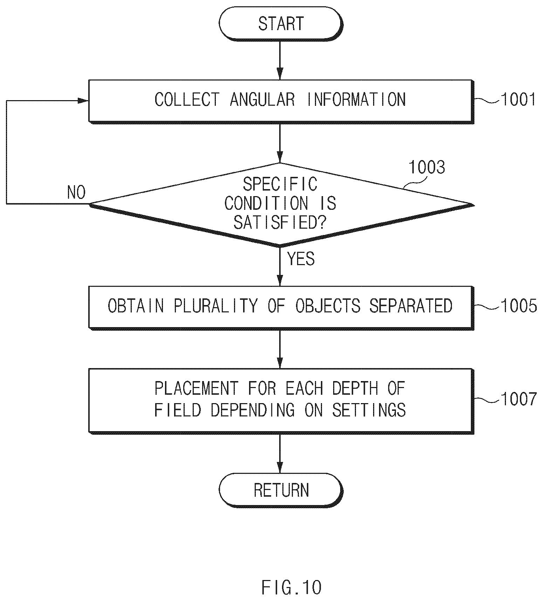

FIG. 10 is a view illustrating another example of a method for operating a foldable electronic device related to providing a screen according to an embodiment.

Referring to FIG. 10, according to an embodiment, related to the method for operating the foldable electronic device according to an embodiment, the processor 120 (e.g., a processor included in electronic devices of FIGS. 1 to 8; the processor 120 will be employed in the following description) of the foldable electronic device 200 (e.g., any one of the electronic devices described with reference to FIGS. 1 to 8; the foldable electronic device 200 will be employed in the following description) may collect angle information in operation 1001. The processor 120 may perform operation 1001 which is the same as or similar to operation 901 described above. Accordingly, operation 1001 may be substituted with operation 901.

In operation 1003, the processor 120 may determine whether a specific condition is satisfied. For example, the processor 120 may determine whether the changed angle value, which is collected, is equal to or greater than a specific size previously defined. Alternatively, the processor 120 may determine whether the included angle of the foldable electronic device 200 is increased to at least a specific angle for at least a specific time. Operation 1003 may be the same as or similar to operation 903 described above, so the details of operation 1003 may be substituted with the description about operation 903.

When the specific condition is satisfied, the processor 120 may obtain a plurality of objects separated in operation 1005. In this connection, the processor 120 may obtain the plurality of separated objects stored in the memory 130 of the foldable electronic device 200. The foldable electronic device 200 may previously perform an operation for selecting an image having at least some objects to be changed based on an included angle between housings of the foldable electronic device 500, thereby supporting obtaining the plurality of separated objects. In this connection, the foldable electronic device 200 may provide a menu for selecting an image to be applied with changed angle information, and may output a screen interface for selecting the image when the menu is selected, thereby providing an opportunity for selecting the image for a user. When a specific image is selected, the processor 120 of the foldable electronic device 200 may analyze the selected image, may separate the plurality of objects, and may store the plurality of objects in the memory 130 for the management. The processor 120 may inspect the memory 130 and may obtain the plurality of separated objects, which is previously stored, when the changed angle information satisfies a specific condition.

In operation 1007, the processor 120 may perform placement based on each depth of field depending on settings, with respect to the image, in which the plurality of objects are separated. Operation 1007 may be the same as or similar to operation 907 described above, so the details of operation 1007 may be substituted with the description about operation 907. Thereafter, the processor 120 may perform the relevant function until the event for terminating a function for changing a screen based on the angle information occurs, or until power is shut off.

The method for operating the foldable electronic device described above with reference to FIGS. 9 and 10 may be applied to at least one of the electronic devices described above with reference FIGS. 1 to 6. In addition, the operating method described above with reference to FIGS. 9 and 10 may be identically or similarly applied to the wearable electronic device, except for the structure to collect the angle information.

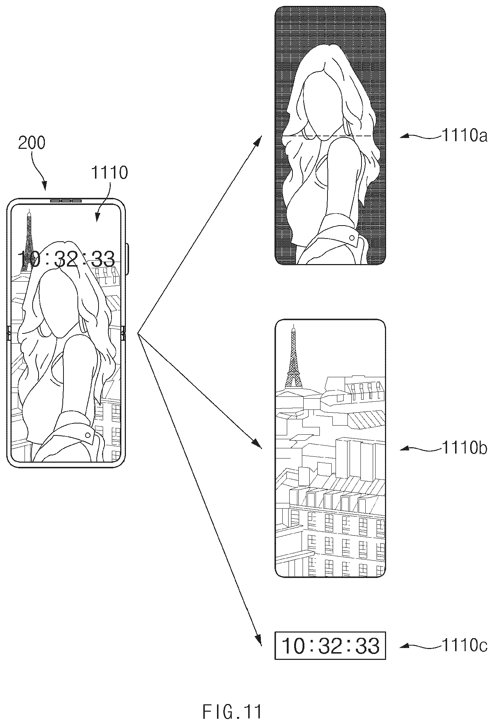

FIG. 11 is a view illustrating an example of separating objects of an image according to an embodiment. Prior to the description, although the description about separating an object in FIG. 11 will be made based on the foldable electronic device 200 described above with reference to FIG. 2, the disclosure is not limited thereto. For example, a function for separating the object to be described with reference to FIG. 11 may be identically applied to the electronic devices described above with reference to FIGS. 1 to 8.

Referring to FIGS. 1, 2, and 11, a content screen 1110 may be output to the display 260 of the foldable electronic device 200. The content screen 1110 may include, for example, a home screen of the foldable electronic device 200, or a screen output when the display 260 is changed from the turn-off state to the turn-on state. Alternatively, the content screen 1110 of FIG. 11 may be output to the display 260, when the first housing 210 and the second housing 220 of the foldable electronic device 200 are unfolded. Alternatively, the content screen 1110 may include a locking screen of the foldable electronic device 200.

The content screen 1110 output to the display 260 of the foldable electronic device 200 may include, for example, a subject object 1110a, a background object 1110b, and a text object 1110c. The subject object 1110a may include a figure object placed at the central portion of the content screen 1110. The background object 1110b may include a background image placed at the rear of the subject object 1110a. The text object 1110c may include a text for indicating time information or a clock text, which is output through a function for displaying a clock of the foldable electronic device 200. The text object 1110c may be substituted with an image object for indicating time using an image. According to an embodiment, the subject object 1110a and the background object 1110b included in the content screen 1110 may be objects separated from one image file. Alternatively, the background object 1110b and the subject object 1110a may include images separated from different source images. The text object 1110c may be an object which is output through a function for displaying a clock of the foldable electronic device 200. Accordingly, the processor 120 of the foldable electronic device 200 may identify source images of objects constituting the content screen 1110, and may collect the objects from the identified source images in the process of separating the objects from the content screen 1110. Alternatively, the processor 120 may extract and separate a plurality of objects from the image, when the plurality of objects are included in one image.

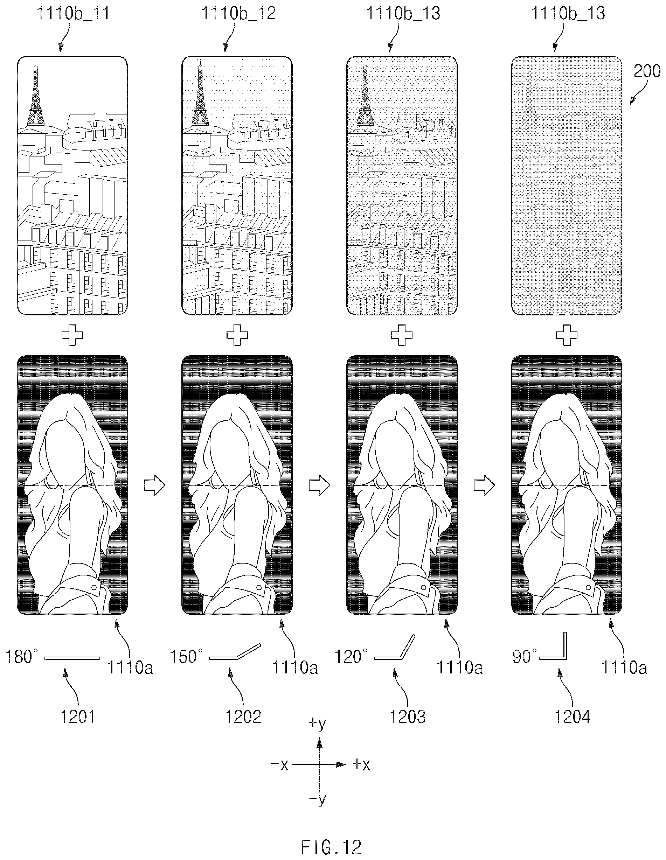

FIG. 12 is a view illustrating an example of changing a depth of field of the content screen based on an angle change according to an embodiment.

Referring to FIGS. 2, 11, and 12, the processor 120 of the foldable electronic device 200 may adjust at least some objects included in the content screen 1110 output to the display 260 to correspond to various angle states of the foldable electronic device 200. According to an embodiment, the processor 120 of the foldable electronic device 200 may extract the subject object 1110a and the background object 1110b, as illustrated in the drawings. The processor 120 may uniformly maintain an image output state with respect to the subject object 1110a, regardless of the change of an angle of the foldable electronic device 200. Alternatively, the processor 120 may gradually change the depth of field with respect to the background object 1110b to correspond to the change of the angle of the foldable electronic device 200 (changing the depth of field refers to changing the focus of a camera, changing an aperture value of the camera, or changing an F value of the camera).

According to an embodiment, the processor 120 may create a focused image or an image (an image having a blur degree of less than a first set value) having the sharpness of at least a first specific value, as a first background object 1110b_11, when the foldable electronic device 200 is in a first angle state 1201 (e.g., an unfolded state; an angle between the first housing 210 and the second housing 220 of the foldable electronic device 200 is 180°).

The processor 120 may create an image having the sharpness ranging from less than the first specific value to a second specific value or a blur degree ranging from the first set value to less than a second set value, as a second background object 1110b_12, when the foldable electronic device 200 is in a second angle state 1202 (e.g., an angle between the first housing 210 and the second housing 220 of the foldable electronic device 200 is 150°). The second background object 1110b_12 may be, for example, an image more unclear, an image having a lower sharpness, or an image having a higher blur degree, as compared to the first background object 1110b_11.

The processor 120 may create an image having the sharpness ranging from less than the second specific value to a third specific value or a blur degree ranging from the second set value to less than a third preset value, as a third background object 1110b_13, when the foldable electronic device 200 is in a third angle state 1203 (e.g., an angle between the first housing 210 and the second housing 220 of the foldable electronic device 200 is 120°). The third background object 1110b_13 may be, for example, an image more unclear, an image having a lower sharpness, or an image having a higher blur degree, as compared to the second background object 1110b_12.

According to an embodiment, the processor 120 may create an image having the sharpness ranging from less than the third specific value to a fourth specific value or a blur degree ranging from the third preset value to less than a fourth preset value, as a fourth background object 1110b_14, when the foldable electronic device 200 is in a fourth angle state 1204 (e.g., an angle between the first housing 210 and the second housing 220 of the foldable electronic device 200 is 90°). The fourth background object 1110b_14 may be, for example, an image more unclear, an image having a lower sharpness, or an image having a higher blur degree, as compared to the third background object 1110b_13.

The processor 120 may output, as the content screen (e.g., the background screen or the home screen, or the locking screen), an image obtained by applying (synthesizing) the background objects 1110b_11, 1110b_12, 1110b_13, and 1110b_14, which are created in the first angle state 1201, the second angle state 1202, the third angle state 1203, and the fourth angle state 1204, respectively, to the subject object 1110a.

According to an embodiment, the processor 120 may adjust the sharpness (or the blur degree) of the subject object 1110a to correspond to the changed angle of the foldable electronic device 200. For example, the processor 120 may apply the subject object 1110a with the change of the sharpness (or the change of the blur degree) inverse to the change of the sharpness (or the change of the blur degree) applied to the background object 1110b_11, 1110b_12, 1110b_13, and 1110b_14. For example, the background object 1110b_11, 1110b_12, 1110b_13, and 1110b_14 may have a lower sharpness (or a higher blur degree), as the folding degree (e.g., the size of the included angle between the first housing 210 and the second housing 220 of the foldable electronic device 200) is decreased. The subject object 1110a may have a higher sharpness, as the folding degree of the foldable electronic device 200 is increased. According to various embodiments, although the above description has been made in that the background object 1110b_11, 1110b_12, 1110b_13, and 1110b_14 have the lower sharpness, as the folding angle of the foldable electronic device 200 is decreased, the disclosure is not limited thereto. The change of the sharpness of the background object 1110b_11, 1110b_12, 1110b_13, and 1110b_14 is varied depending on the folding angle of the foldable electronic device 200. According to an embodiment, as the folding angle is decreased, the change of the sharpness of the background object 1110b_11, 1110b_12, 1110b_13, and 1110b_14 may be increased.

According to an embodiment, the foldable electronic device 200 according to the disclosure may include the first housing and the second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, and at least one processor operatively connected to the at least one sensor and the memory. The at least one processor may be configured to detect an angle and an angle change between the first housing and the second housing, extract a plurality of objects from a specific content of the plurality of contents stored in the memory when the angle or the angle change is equal to or greater than a specific angle, and change a depth of field of at least one object of the plurality of objects extracted, based on the angle or the angle change, such that the at least one object is displayed to be different from a previous display state.

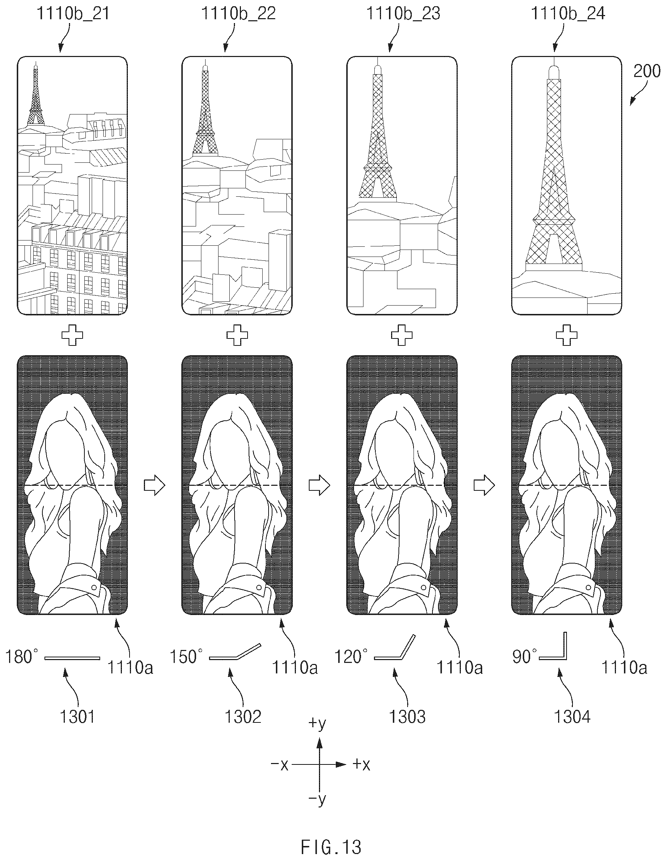

FIG. 13 is a view illustrating an example of a zoom change of a content screen based on an angle change according to an embodiment.

Referring to FIGS. 2, and 13, the processor 120 of the foldable electronic device 200 may adjust at least some objects included in the content screen 1110 output to the display 260 to correspond to various angle states (various changed angles) of the foldable electronic device 200. According to an embodiment, the processor 120 of the foldable electronic device 200 may extract the subject object 1110a and the background object 1110b, as illustrated in the drawings. The processor 120 may gradually adjust a zoom degree of the background object 1110b to correspond to the angle change of the foldable electronic device 200.

According to an embodiment, the processor 120 may create a background object in a first zoom-in state (e.g., the state that a zoom-in function is not applied) as a first background object 1110b_21, when the foldable electronic device 200 is in a first angle state 1301 (e.g., an unfolded state; an angle between the first housing 210 and the second housing 220 of the foldable electronic device 200 is 180°).

The processor 120 may create a background object in a second zoom-in state (e.g., a zoom-in function is applied at a 1.2 x magnification) as a second background object 1110b_22, when the foldable electronic device 200 is in the second angle state 1302 (e.g., the angle between the first housing 210 and the second housing 220 of the foldable electronic device 200 is 150°). For example, the second background object 1110b_22 may be an image obtained by magnifying a portion of the first background object 1110b_21 based on one point of the first background object 1110b_21.

The processor 120 may create a background object in a third zoom-in state (e.g., a zoom-in function is applied at a 1.5 x magnification) as a third background object 1110b_23, when the foldable electronic device 200 is in the third angle state 1303 (e.g., the angle between the first housing 210 and the second housing 220 of the foldable electronic device 200 is 120°). For example, the third background object 1110b_23 may be an image obtained by magnifying a portion of the second background object 1110b_22 based on one point of the second background object 1110b_22.

The processor 120 may create a background object in a fourth zoom-in state (e.g., a zoom-in function is applied at a 2 x magnification) as a fourth background object 1110b_24, when the foldable electronic device 200 is in the fourth angle state 1304 (e.g., the angle between the first housing 210 and the second housing 220 of the foldable electronic device 200 is 90°). For example, the fourth background object 1110b_24 may be an image obtained by magnifying a portion of the third background object 1110b_23 based on one point of the third background object 1110b_23.

The processor 120 may control to output, to the display 260, an image obtained by applying (synthesizing) the subject object 1110a onto the first background object 1110b_21, as the content screen (e.g., the background screen or the home screen, or the locking screen), in the first angle state 1301. The processor 120 may output, to the display 260, an image created by applying (synthesizing) the subject object 1110a onto the second background object 1110b_22, in the second angle state 1302, an image created by applying (synthesizing) the subject object 1110a onto the third background object 1110b_23, in the third angle state 1303, an image created by applying (synthesizing) the subject object 1110a onto the fourth background object 1110b_24, in the fourth angle state 1304.

According to an embodiment, the processor 120 may variously adjust a zoom degree (or a magnification) of the subject object 1110a to correspond to the changed angle of the foldable electronic device 200. For example, the processor 120 may display the subject object 1110a to be gradually zoomed out or zoomed in, corresponding to the change of the angle state of the foldable electronic device 200. The change of the size of the subject object 1110a may be synthesized with the change of the magnification of the background object 1110b.

Meanwhile, although the above description has been made in that the zoom-in ratio of the background object 1110b is increased, as the folding angle of the foldable electronic device 200 is decreased, the disclosure is not limited thereto. For example, as the folding angle of the foldable electronic device 200 is decreased, the zoom-in ratio of the background object 1110b may be decreased. Alternatively, as the folding angle of the foldable electronic device 200 is decreased, the zoom-out magnification of the background object 1110b may be increased.

According to an embodiment, the foldable electronic device 200 according to the disclosure may include the first housing and the second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, and at least one processor operatively connected to the at least one sensor and the memory. The at least one processor may be configured to detect an angle and an angle change between the first housing and the second housing, extract a plurality of objects from a specific content of the plurality of contents stored in the memory when the angle or the angle change is equal to or greater than a specific angle, and change a zoom-in ratio (a zoom-out ratio) of at least one object of the plurality of objects extracted, based on the angle or the angle change, such that the at least one object is displayed to be different from a previous display state.

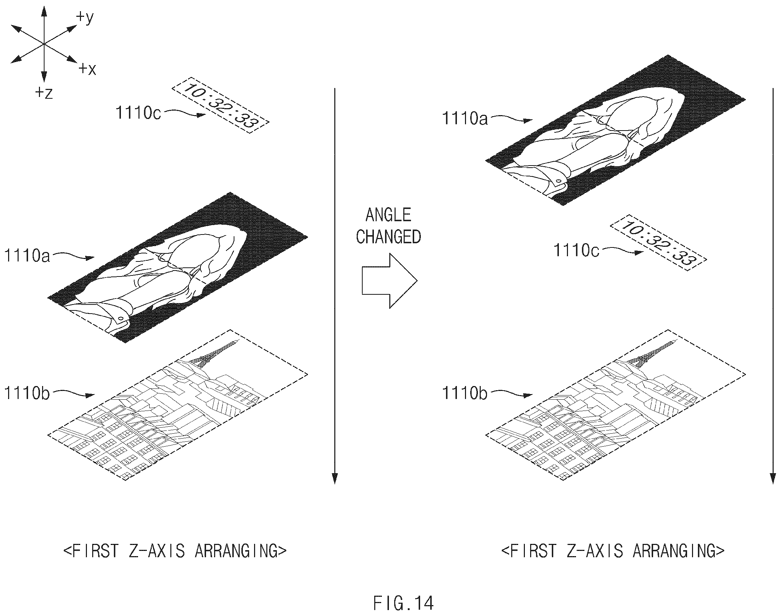

FIG. 14 is a view illustrating an example of changing a sequence of layers of the content screen based on an angle change according to an embodiment.

Referring to FIGS. 2, 11, and 14, the processor 120 of the electronic device 200 may analyze a content screen to be displayed on the display 260 to classify a plurality of objects, as described above. In this process, the processor 120 may suggest the number of objects to be classified or may classify the objects in at least a specific number, depending on settings previously defined. According to an embodiment, the processor 120 may extract the subject object 1110a, the text object 1110c, and the background object 1110b, as illustrated in the drawing.

When the folding angle (e.g., the included angle between the first housing 210 and the second housing 220) of the foldable electronic device 200 is in the first angle state (e.g., the unfolded state), the processor 120 of the foldable electronic device 200 may place the text object 1110c at the highest layer (or a first layer), the subject object 1110a at the second-highest layer (or a second layer), and the background object 1110b at the lowest layer (or the third layer) through a first z-axis arranging manner (or a manner for sequentially layering objects in a virtual z-axis perpendicular to a front surface of the display) based on three-dimensional (3D) layering for the extracted objects.

When the folding angle (e.g., the included angle between the first housing 210 and the second housing 220) of the foldable electronic device 200 is in the second angle state (e.g., a state of forming an angle less than an angle in the unfolded state or a folded state at a specific angle previously defined or more), as the folding angle of the foldable electronic device 200 is changed by external force, the processor 120 of the foldable electronic device 200 may place the subject object 1110a at the highest layer (or the first layer), the text object 1110c at the second-highest layer (or the second layer), and the background object 1110b at the lowest layer (or the third layer) through a second z-axis arranging manner based on three-dimensional (3D) layering for the extracted objects.

Meanwhile, although the above description has been made in that the sequence of the layers including the objects is changed when the foldable electronic device 200 is changed from the unfolded state to the folded state, the processor 120 may similarly change the sequence of the layers including the objects, respectively, even when the foldable electronic device 200 is changed from the folded state to the unfolded state. In addition, although the above description has been made in that the background object 1110b is fixed, and only the sequence of the subject object 1110a and the text object 1110c is changed by way of example, the disclosure is not limited thereto. For example, even the background object 1110b may be placed on the text object 1110c or the subject object 1110a, as the angle state of the foldable electronic device 200 is changed.

In relation to the classification of objects, the processor 120 of the foldable electronic device 200 may perform an operation for identifying a content-based subject. The content may be selected using a category-based training network model. The foldable electronic device 200 may identify a user pattern (e.g., a life pattern, or an electronic device use pattern) using a device through an artificial intelligence (AI) system, and may provide a customized service appropriate to the user pattern. According to an embodiment, the information about the subject may be generated by the AI system. The AI system may be a rule-based system, a neural network-based system (e.g., feedforward neural network (FNN), or a recurrent neural network (RNN). Alternatively, the AI system may be a combination of the above-described systems or another AI system.

According to an embodiment, the foldable electronic device 200 according to the disclosure may include the first housing and the second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, and at least one processor operatively connected to the at least one sensor and the memory. The at least one processor may be configured to detect an angle and an angle change between the first housing and the second housing, extract a plurality of objects from a specific content of the plurality of contents stored in the memory when the angle or the angle change is equal to or greater than a specific angle, and change the sequence of layers corresponding the plurality of objects extracted, based on the angle or the angle change, such that the at least one object is displayed to be different from a previous display state.

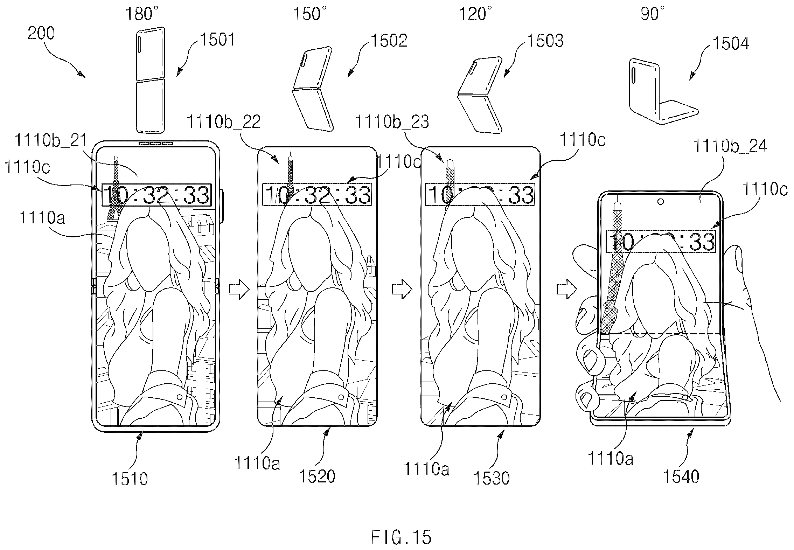

FIG. 15 is a view illustrating an example of changing a sequence of layers of a content screen and of applying a zoom ratio of the content screen based on an angle change according to an embodiment.

Referring to FIGS. 2, 11, and 15, the processor 120 of the foldable electronic device 200 may output a first content screen 1510 to the display 260 in a first angle state 1501 (e.g., the angle between the first housing 210 and the second housing 220 is 180 °). The first content screen 1510 may correspond to a state that a first background object 1110b_21 is placed at the lowest layer, the subject object 1110a is placed at the second-highest layer, and the text object 1110c is placed at the highest layer. According to an embodiment, as the first background object 1110b_21 is placed at the lowest layer, at least a portion of the first background object 1110b_21 may be hidden by objects included in the layers placed on the lowest layer. For example, a region, which corresponds to a feature displaying region of the subject object 1110a and a text display region of the text object 1110c, of the first background object 1110b_21 may be hidden by the text displaying region and the feature displaying region. According to an embodiment, as a layer corresponding to the text object 1110c is placed on a layer corresponding to the subject object 1110a, a portion of the feature displaying region corresponding to the subject object 1110a may be hidden by the text displaying region. In the first angle state 1501, the zoom-in ratio of the first background object 1110b_21 may be a 1x magnification (the ratio equal to the ratio of an original image).

The processor 120 of the foldable electronic device 200 may output a second content screen 1520 to the display 260 in a second angle state 1502 (e.g., the angle between the first housing 210 and the second housing 220 is 150 °). The second content screen 1520 may correspond to the state that the second background object 1110b_22 is placed at the lowest layer, the subject object 1110a is placed at the second-highest layer, and the text object 1110c is placed at the highest layer. In the second angle state 1502, the zoom-in ratio of the second background object 1110b_22 may be a (1 x a) x magnification ('a' is an integer or a finite decimal number).

The processor 120 of the foldable electronic device 200 may output a third content screen 1530 to the display 260 in a third angle state 1503 (e.g., the angle between the first housing 210 and the second housing 220 is 120 °). The third content screen 1530 may correspond to the state that the third background object 1110b_23 is placed at the lowest layer, the subject object 1110a is placed at the highest layer, and the text object 1110c is placed at the second-highest layer. According to an embodiment, as a layer corresponding to the subject object 1110a is placed on a layer corresponding to the text object 1110c, a portion of the text displaying region corresponding to the text object 1110c may be hidden by the feature displaying region. In the third angle state 1503, the zoom-in ratio of the third background object 1110b_23 may be a (1 x b) x magnification ('b' having an absolute value, which is an integer or a finite decimal number, greater than 'a').

The processor 120 of the foldable electronic device 200 may output a fourth content screen 1540 to the display 260 in a fourth angle state 1504 (e.g., the angle between the first housing 210 and the second housing 220 is 90 °). The fourth content screen 1540 may correspond to the state that the fourth background object 1110b_24 is placed at the lowest layer, the subject object 1110a is placed at the highest layer, and the text object 1110c is placed at the second-highest layer. In the fourth angle state 1504, the zoom-in ratio of the fourth background object 1110b_24 may be a (1 x c) x magnification ('c' has an absolute value, which is an integer or a finite decimal number, greater than 'b').

As described above, a function for changing a screen based on an angle change according to the disclosure may not only change the sequence of layers of the content screen output to the display based on the angle change of the foldable electronic device 200, but also integrally adjust a zoom-ratio of the background object. Meanwhile, although the above description has been made in that the sequence of the layers including the objects is changed, when the folding angle of the foldable electronic device 200 is 120 °, by way of example, the angle for changing the sequence of the layers may be varied depending on settings or a user input.

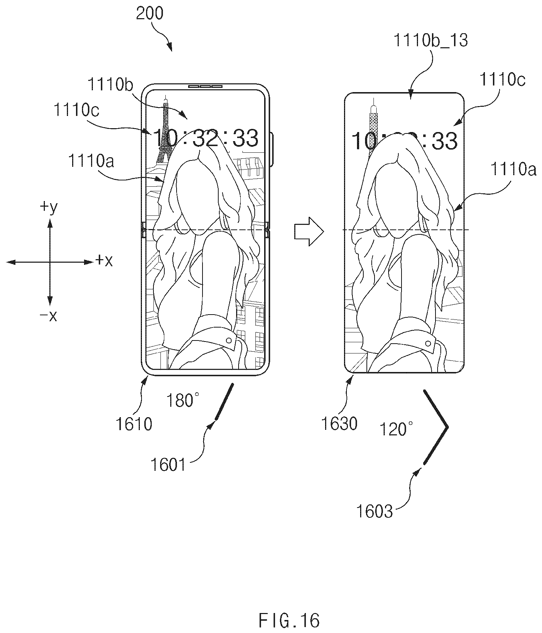

FIG. 16 is a view illustrating an example of changing a sequence of layers of a content screen and of changing depth of field of the content screen based on an angle change according to an embodiment.

Referring to FIGS. 2, 11, and 16, the processor 120 of the foldable electronic device 200 may output a first content screen 1610 to the display 260 in a first angle state 1601 (e.g., the angle between the first housing 210 and the second housing 220 is 180 °). The first content screen 1610 may correspond to the state that a first background object 1110b is placed at the lowest layer, the subject object 1110a is placed at the second-highest layer, and the text object 1110c is placed at the highest layer. Such a display state of the content screen may be the same as or similar to a display state of the first content screen 1510 described above with reference to FIG. 15. The first background object 1110b may include an image having sharpness of at least a specific first value.

The processor 120 of the foldable electronic device 200 may output a second content screen 1630 to the display 260 in a second angle state 1603 (e.g., the angle between the first housing 210 and the second housing 220 is 120 °). The second content screen 1630 may correspond to the state that the second background object 1110b_13 is placed at the lowest layer, the subject object 1110a is placed at the highest layer, and the text object 1110c is placed at the second-highest layer. According to an embodiment, as a layer corresponding to the subject object 1110a is placed on a layer corresponding to the text object 1110c, a portion of the text displaying region corresponding to the text object 1110c may be hidden by the feature displaying region. In the second angle state 1603, the second background object 1110b_13 may have the sharpness of less than a specific second value which is lower than the sharpness of the first background object 1110b. Alternatively, the second background object 1110b_13 may include an image more unclear than the first background object 1110b.

As described above, a function for changing a screen based on an angle change according to the disclosure may not only change the sequence of layers of the content screen output to the display based on the angle change of the foldable electronic device 200, but also integrally adjust a sharpness of the background object. Meanwhile, although the above description has been made in that the sequence of the layers including the objects is changed by way of example, when the folding angle of the foldable electronic device 200 is 120 °, the angle for changing the sequence of the layers may be varied depending on settings or a user input.

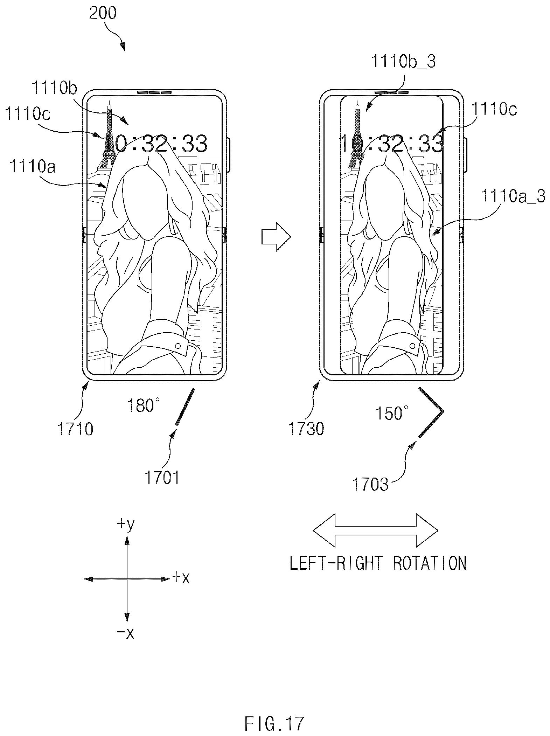

FIG. 17 is a view illustrating another example of a function for changing a screen based on an angle change, according to an embodiment.

Referring to FIGS. 2, 11, and 17, the processor 120 of the foldable electronic device 200 may output a first content screen 1710 in a first angle state 1701 (e.g., the included angle between the first housing 210 and the second housing 220 is 180 °). The first content screen 1710 may include a first subject object 1110a, the first background object 1110b, and the text object 1110c.

Referring to FIGS. 2, 11, and 17, the processor 120 of the foldable electronic device 200 may output a second content screen 1730 in a second angle state 1703 (e.g., the included angle between the first housing 210 and the second housing 220 is 150 °). The second content screen 1730 may include the text object 1110c, a second background object 1110a_3, and a second background object 1110b_3. The second subject object 1110a_3 may be an object obtained by changing the width of the first subject object 1110a in an x-axis, corresponding to the folding angle of the foldable electronic device 200. In addition, the second subject object 1110b_3 may be an object obtained by changing the width of the first background object 1110b in the x-axis, corresponding to the folding angle of the foldable electronic device 200. The text object 1110c may be, for example, constantly maintained, regardless of the change of the folding angle of the foldable electronic device 200.

According to an embodiment, the processor 120 of the foldable electronic device 200 may collect sensing information about a tilting operation in at least one direction among an up-down direction, a left-right direction, or a back-forth direction of the foldable electronic device 200 using at least one sensor (e.g., a gyro sensor, or an acceleration sensor). The processor 120 of the foldable electronic device 200 may change the form of a first content screen 1710 and a second content screen 1730, which is in progress of being output, based on the collected sensing information. According to an embodiment, when the foldable electronic device 200 is tilted left or right (back or forth, as another example), at least one of an x-axis width or y-axis width of the content screen displayed based on a tilting degree may be changed.

According to an embodiment, even if the tilting degree is an equal degree, left, right, back, or forth, the content screen, which is in progress of being output to the display 260 of the foldable electronic device 200, may have a size varied depending on the state of the content screen. For example, the change (e.g., a left or right width, or an amount reduced in an x-axis width) of the first content screen 1710 may be greater than (or smaller than) the change of the second content screen 1730, with respect to an equal tilting degree.

According to an embodiment, the foldable electronic device 200 may change the inclination of the content screen output to the display 260 based on the angle change, and the inclination of the content screen may have a tilting degree varied depending on the size of the folding angle. For example, in a first angle state 1701, the processor 120 may control to display a screen changed, such that the screen in progress of being output to the display 260 is tilted left by a first size, as left-tilting by the first size occurs. In a second angle state 1703, the processor 120 may control to display a screen changed, such that the screen in progress of being output to the display 260 is tilted left by a second size smaller than a first size, as the left-tilting by the first size occurs.

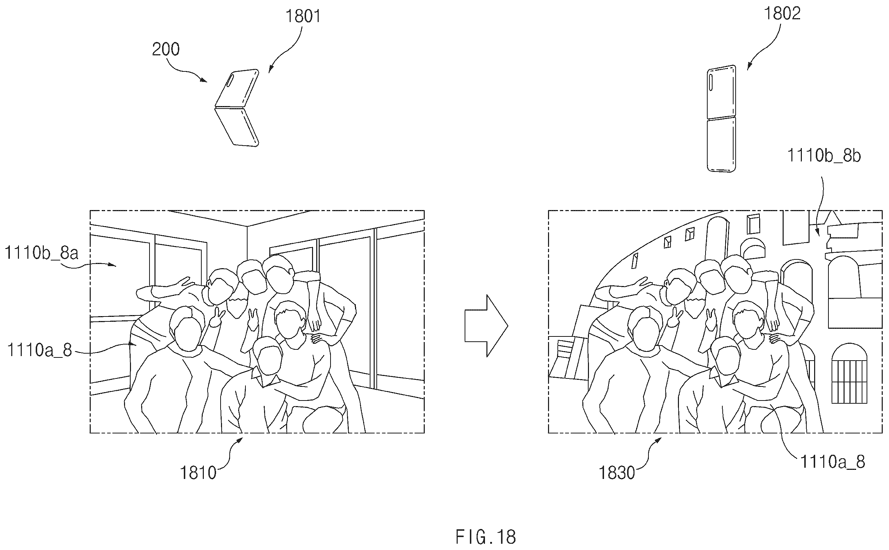

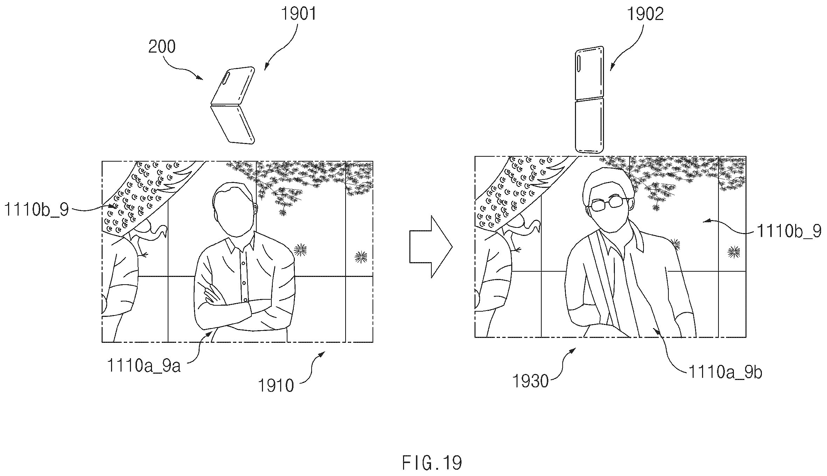

FIG. 18 is a view illustrating an example related to replacing at least some objects based on an angle change, according to an embodiment, and FIG 19 is a view illustrating an example related to replacing at least some objects based on an angle change, according to an embodiment.

Referring to FIGS. 2, 11, and 18, the processor 120 of the foldable electronic device 200 may output a first content screen 1810 in a first angle state 1801 (e.g., the included angle between the first housing 210 and the second housing 220 is 150 °). The first content screen 1810 may include a first subject object 1110a_8, and a first background object 1110b_8a.

The processor 120 of the foldable electronic device 200 may output a second content screen 1830 in a second angle state 1802 (e.g., the included angle between the first housing 210 and the second housing 220 is 180 °). The second content screen 1830 may include, for example, the first subject object 1110a_8, and a second background object 1110b_8b. The second background object 1110b_8b may be an object different from the first background object 1110b_8a. In this connection, the processor 120 of the foldable electronic device 200 may obtain only a background object without a subject object, from a folder (e.g., a gallery) of the foldable electronic device 200 or an external electronic device.

According to an embodiment, the processor 120 of the foldable electronic device 200 may apply at least one of the change of the depth of field, the zoom change, or the change of the sequence of layers to the first background object 1110b_8a until a time point at which the folding angle of the foldable electronic device 200 is changed to a specific angle, and the first background object 1110b_8a may be removed and the second background object 1110b_8b may be output to the display 260, when the folding angle is changed to at least a specific angle. The processor 120 of the foldable electronic device 200 may return from an output state of the second content screen 1830 to an output state of the first content screen 1810, when the second angle state 1802 is changed to the first angle state 1801 again. While the second background object 1110b_8b is in the first angle state 1801, as an angle is changed after being output in the second angle state 1802, the processor 120 of the foldable electronic device 200 may apply at least one of the change of the depth of field, the zoom change, or the change of the sequence of layers to the second background object 1110b_8b. In addition, while a third angle state comes as the folding angle is further reduced from the first angle state 1801, the processor 120 of the foldable electronic device 200 may apply at least one of the change of the depth of field, the zoom change, or the change of the sequence of layers to the first background object 1110b_8a. In this case, when the change of the sequence of layers is applied, the sequence of at least a portion of the background object and at least a portion of the subject object may be changed. The first background object 1110b_8a or the second background object 1110b_8b may be selected through the user input or may be selected randomly by the processor 120.

Referring to FIGS. 2, 11, and 19, the processor 120 of the foldable electronic device 200 may output a first content screen 1910 in a first angle state 1901 (e.g., the included angle between the first housing 210 and the second housing 220 is 150 °). The first content screen 1910 may include a first subject object 1110a_9a, and a first background object 1110b_9.

The processor 120 of the foldable electronic device 200 may output a second content screen 1930 in a second angle state 1902 (e.g., the included angle between the first housing 210 and the second housing 220 is 180 °). The second content screen 1930 may include, for example, a second subject object 1110a_9b, and a first background object 1110b_9. The second subject object 1110a_9b may be an object different from the first subject object 1110a_9a. In this connection, the processor 120 of the foldable electronic device 200 may obtain at least one subject object included in another content screen or a subject object from another content through a user input. The processor 120 of the foldable electronic device 200 may output the second subject object 1110a_9b on the first background object 1110b_9, instead of the first subject object 1110a_9a, when the state of the foldable electronic device 200 becomes in the second angle state 1902. In this case, the processor 120 may output the second subject object 1110a_9b to be at least partially overlapped with a region in which the first subject object 1110a_9a is positioned.

According to an embodiment, the processor 120 of the foldable electronic device 200 may apply at least one of the change of the depth of field, the zoom change, or the change of the sequence of layers to the fist subject object 1110a_9a and the first background object 1110b_9 until a time point at which the folding angle of the foldable electronic device 200 is changed to a specific angle, and the first subject object 1110a_9a may be removed and the second subject object 1110a_9b and the first background object 1110b_9 may be output to the display 260, when the folding angle is changed to at least the specific angle. The processor 120 may recover, to an original state (or an original image state or a state before the change of the depth of field, the zoom change, or the change of sequence of layers is applied), the state of the first background object 1110b_9 at a time point at which the second subject object 1110a_9b is output to the display 260.

The processor 120 of the foldable electronic device 200 may return from an output state of the second content screen 1930 to an output state of the first content screen 1910, when the second angle state 1902 is changed to the first angle state 1901 again. In the return process, the processor 120 may output the first subject object 1110a_9a to be at least partially overlapped with a region in which the second subject object 1110a_9b is positioned. While the second subject object 1110b_9b is in the first angle state 1901, as an angle is changed after being output in the second angle state 1902, the processor 120 of the foldable electronic device 200 may apply at least one of the change of the depth of field, the zoom change, or the change of the sequence of layers to at least of the second subject object 1110a_9b and the first background object 1110b_9. In addition, while a third angle state comes as the folding angle is further reduced from the first angle state 1901, the processor 120 of the foldable electronic device 200 may apply at least one of the change of the depth of field, the zoom change, or the change of the sequence of layers to the first subject object 1110a_9a and the first background object 1110b_9.

According to an embodiment, the foldable electronic device 200 according to the disclosure may include the first housing and the second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, and at least one processor operatively connected to the at least one sensor and the memory. The at least one processor may be configured to detect the angle or an angle change between the first housing and the second housing, extract a plurality of objects from a specific content of the plurality of contents stored in the memory when the angle or the angle change is equal to or greater than a specific angle, substitute at least one object of the plurality of objects extracted with an object included in another content, and output the result.

The disclosure may disclose a method for providing a screen based on driving of the processor of the electronic device (e.g., the foldable electronic device 200). For example, the method for providing the screen of the disclosure may include an operation for detecting an angle and an angle change between the first housing and the second housing, and an operation for substituting a plurality of objects from a specific content of a plurality of contents stored in the memory with an object included in another content, based on the angle or the angle change and for outputting the result, when the angle or the angle change is equal to or greater than a specific angle. In this case, in the operation for outputting the result, the object may be extracted from the content to be obtained or objects previously stored in the memory may be obtained.

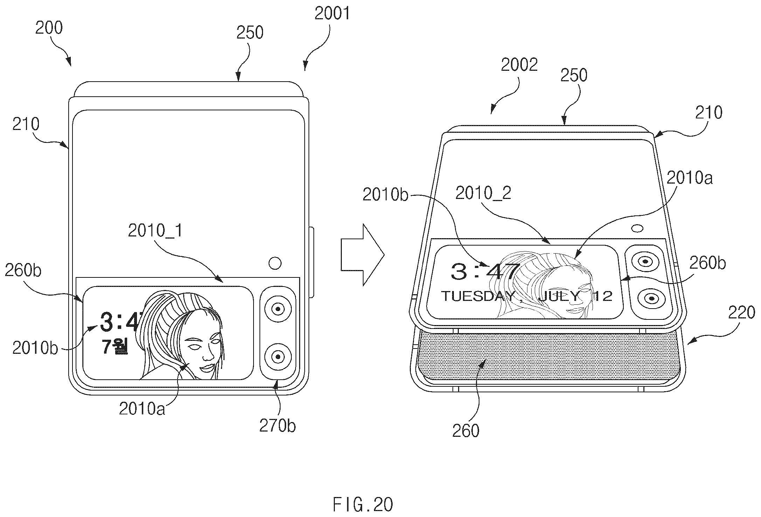

FIG. 20 is a view illustrating an example of changing a screen based on an angle change of an auxiliary display, according to an embodiment.

Referring to FIGS. 2, 11, and 20, the foldable electronic device 200 may include the display 260, an auxiliary display 260b, and a second camera 270b. The second camera 270b may be omitted from components of the foldable electronic device 200. The display 260 may be maintained in the turn-off state, when the foldable electronic device 200 is open at less than a specific angle, and may be turned on, when the foldable electronic device 200 is open at the specific angle or more. The auxiliary display 260b may be turned on, even when the foldable electronic device 200 is at less than the specific angle. For example, in a first angle state 2001, the foldable electronic device 200 may be in the state that the first housing 210 and the second housing 220 are arranged to face in directions opposite to each other. When the first housing 210 starts to be spaced apart from the second housing 220, the processor 120 of the foldable electronic device 200 may turn on the auxiliary display 260b. Alternatively, according to an embodiment, the processor 120 of the foldable electronic device 200 may turn on the auxiliary display 260b, when an event for touching the auxiliary display 260b occurs. According to an embodiment, the processor 120 of the foldable electronic device 200 may turn on the auxiliary display 260b, when an input for gripping a device is made. When the auxiliary display 260b is turned on, the processor 120 may output a first content screen 2010_1 to the auxiliary display 260b. The first content screen 2010_1 may be a screen including, for example, a subject object 2010a and a text object 2010b. The first content screen 2010_1 may place the subject object 2010a in a layer upper than a layer for the text object 2010b. Accordingly, at least a portion of a text displaying region included in the text object 2010b may be hidden by the subject object 2010a.

According to an embodiment, the foldable electronic device 200 may be in a second angle state 2002 in which the included angle between the first housing 210 and the second housing 220 is at least a specific angle. The processor 120 may output a second content screen 2010_2 obtained by changing the sequence of layers of objects in progress of being output to the auxiliary display 260b, when the foldable electronic device 200 is in the second angle state 2002. For example, the processor 120 may control to output the second content screen 2010_2, which is obtained by placing the text object 2010b on the subject object 2010a, by changing the sequence of layers of the subject object 2010a and the text object 2010b.

According to an embodiment, when the foldable electronic device 200 is changed from the second angle state 2002 to the first angle state 2001, the processor 120 may control to output the first content screen 2010_1 obtained by changing the sequence of the layers for the subject object 2010a and the text object 2010b again. Alternatively, even if the foldable electronic device 200 is changed from the second angle state 2002 to the first angle state 2001, the processor 120 may control to output the second content screen 2010_2 obtained by maintaining the sequence of the layers for the subject object 2010a and the text object 2010b to be in a previous state.

Meanwhile, although the above description has been described in that the text object 2010b is placed on the subject object 2010a and then placed under the subject object 2010a based on an angle change by way of example, the disclosure is not limited thereto. For example, the processor 120 of the foldable electronic device 200 may control to place the text object 2010b under the subject object 2010a and then place the text object 2010b on the subject object 2010a depending on an angle change.

According to an embodiment, when the state of the foldable electronic device 200 is in a third angle state (e.g., the state that the first housing 210 and the second housing 220 are further spread than being in the second angle state; the state that the first housing 210 and the second housing 220 are spread at 30 ° or 45 ° or more), the processor 120 may control the auxiliary display 260b such that the screen in progress of being output on the auxiliary display 260b is output to the display 260. In this operation, the processor 120 may control the auxiliary display 260b to be turned off or to be maintained turned on for a specific time.

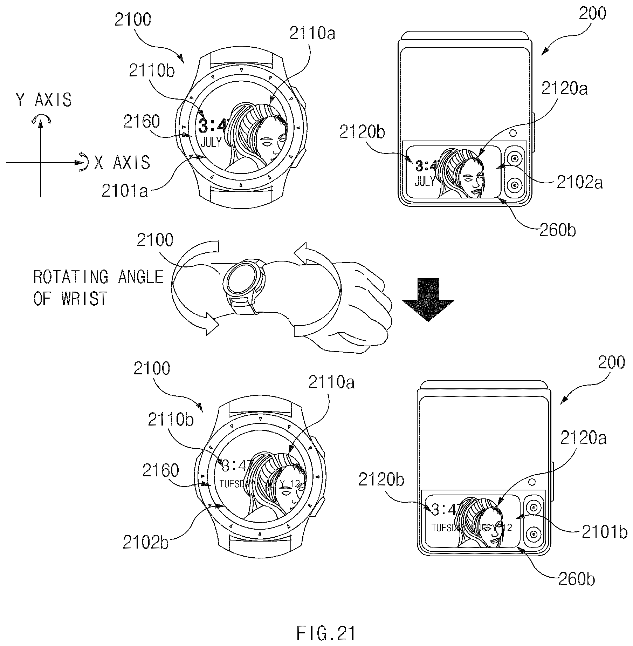

FIG. 21 is a view illustrating an example of obtaining a changed angle value from an external electronic device according to an embodiment.

Referring to FIGS. 2, 11, and 21, a user may use the foldable electronic device 200 while wearing a wearable electronic device 2100. The wearable electronic device 2100 and the foldable electronic device 200 may form a communication channel such that state information of the wearable electronic device 2100 or the foldable electronic device 200 is transmitted to a counterpart device. For example, the change of the state (or the change of the state that a rotating angle is changed as a wrist of the user wearing the wearable electronic device 2100 is rotated, or the change of a rotating state of a rotating bezel of the wearable electronic device 2100) of the wearable electronic device 2100 may be detected by a sensor disposed in the wearable electronic device 2100, and the detected sensor value may be transmitted to the foldable electronic device 200.

The wearable electronic device 2100 may have a state of outputting a first content screen 2110b, in which a first subject object 2110a is placed at a layer upper than a layer for the first text object 2110b, to a watch display 2160. The foldable electronic device 200 may have a state of outputting a second content screen 2102a obtained by placing a second subject object 2120a at a layer upper than a layer for a second text object 2120b, to the auxiliary display 260b. Regarding the state described above, the foldable electronic device 200 may transmit the second content screen 2102a, which is in progress of being output on the auxiliary display 260b, to the wearable electronic device 2100 such that the second content screen 2102a is output on the watch display 2160 as the first content screen 2101a.

The wearable electronic device 2100 may collect sensor information based on the angle change, through a gesture of the user wearing the wearable electronic device 2100. The wearable electronic device 2100 may provide collected sensor information to the foldable electronic device 200. The foldable electronic device 200 may change the second content screen 2102a which is in progress of being output to the auxiliary display 260b, to correspond to the collected sensor information. For example, the foldable electronic device 200 may output a third content screen 2101b obtained by placing the second subject object 2120a at the layer lower than the layer for the second text object 2120b. In the third content screen 2101b, at least a portion of the second subject object 2120a may be hidden by the second text object 2120b. The foldable electronic device 200 may transmit information about the updated third content screen 2101b to the wearable electronic device 2100. Accordingly, the wearable electronic device 2100 may control to output a fourth content screen 2102b obtained by placing the first subject object 2010a at the layer lower than the layer for the first text object 2010b to be matched with a screen display state (the output state of the third content screen 2101b) of the auxiliary display 260b.

Meanwhile, although the above description has been described in that the first or fourth content screen 2101a or 2102b output to the watch display 2160 of the wearable electronic device 2100 is synchronized with the second or third content screen 2102a or 2101b in process of being output to the auxiliary display 260b of the foldable electronic device 200, the disclosure is not limited thereto. For example, the screen of the auxiliary display 260b may be changed in synchronization between the content screen in progress of being output to the wearable electronic device 2100 and the state of the foldable electronic device 200. In this case, the wearable electronic device 2100 may directly process the sensor information to update the content screen, and may transmit the updated sensor information to the foldable electronic device 200. Alternatively, the wearable electronic device 2100 may share only the sensor information, and the update of the content screen may be performed by each device.

According to an embodiment, at least one of the change of the depth of field, a zoom ratio change, the change of the sequence of layers including objects, or the substitution with another object may be applied to at least one object of a plurality of objects included in the content described with reference to FIGS. 11 to 20.

According to an embodiment, the electronic device (e.g., at least one of the wearable electronic device 2100 or the foldable electronic device 200) may variously change a speed of changing a content output to the display to correspond to the rotating speed of the bezel of the wearable electronic device 2100. In this connection, the electronic device may receive an angle change and a change speed value, and may control to change a content screen based on the received values. According to an embodiment, when a received change speed is higher, the electronic device may rapidly increase at least one change speed among the change of the depth of field, the zoom ratio change, and the change of the sequence of the layers in the z-axis, to be matched with the received change speed. According to an embodiment, when the received change speed is lower, the electronic device may decrease at least one change speed among the change of the depth of field, the zoom ratio change, and the change of the sequence of the layers in the z-axis, to be matched with the received change speed.

According to an embodiment, the foldable electronic device 200 according to the disclosure may include the first housing and the second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, a communication circuit to make communication with an external electronic device, and at least one processor operatively connected to the at least one sensor, the communication circuit, and the memory. The at least one processor may be configured to detect an angle and an angle change between the first housing and the second housing, extract a plurality of objects from a specific content of the plurality of contents stored in the memory when the angle or the angle change is equal to or greater than a specific angle, change a depth of field, a zoom-in ratio or a zoom-out ratio, or a layer sequence of at least one object of the plurality of objects extracted, based on the angle or the angle change, and transmit a content including the changed object to the external electronic device.

According to an embodiment, an electronic device according to the disclosure may include a communication circuit to make communication with an external electronic device, a display, and at least one processor operatively connected to the communication circuit and the display, and the at least one processor may be configured to receive a changed angle value from the external electronic device through the communication circuit, and extract a plurality of objects from a content in progress of being output to the display, when the angle change is equal to or greater than a specific angle, change a depth of field, a zoom-in ratio or a zoom-out ratio, or a layer sequence of at least one object of the plurality of objects extracted, based on the angle change, and output a content including the changed object to the display.

The disclosure may disclose a method for providing a screen based on an operation of the electronic device. For example, the method for providing the screen may include an operation for receiving a changed angle value from an external electronic device through a communication circuit, , an operation for changing at least one a depth of field, a zoom-in ratio or a zoom-out ratio, or a layer sequence of at least one object of a plurality of objects included a content (or at least one of a content to be output, a content stored in a memory, or a content received from the external electronic device) in progress of being output to the display, based on the angle change, when the changed angle value indicates at least a specific angle, and an operation for outputting a content including the changed object to the display.

Meanwhile, according to some embodiment, although the above description has been made in that a content screen is changed as an angle is changed while ranging from 180 ° to 90 °, a technology for deforming a screen based on an angle change according to the disclosure may be identically or similarly applied even in a process for outputting a content screen at an angle ranging from 90 ° to 5°.

In addition, according to an embodiment, although the above descriptions have been made in terms of the function for changing the depth of field of the specific object as illustrated in FIG. 12, the function for changing the zoom ratio as illustrated in FIG. 13, the function for changing the sequence of the layers as illustrated in FIG. 14, the function for changing the size of the object or the inclination of the object as illustrated in FIG. 15, and the function for substituting at least one object as illustrated in FIGS. 18 and 19, the electronic device (e.g., at least one of the foldable electronic device 200 or the wearable electronic device 2100 or at least one of electronic devices described with reference to FIGS. 1 to 8) according to the disclosure may employ at least one of the above-described functions, may employ a plurality of functions among the above-described functions, or may independently employ each of the above-described functions. Accordingly, the disclosure should be interpreted as the form including an operation for driving a processor of an electronic device providing a specific function, and an operation for driving a processor complexly performing the above-described various functions, without the limitation to an embodiment related to a specific function. In addition, the operation for driving the processor disclosed according to a specific embodiment may be substituted with or complemented by an operation for driving a processor disclosed according to another embodiment. Accordingly, the operation of the specific processor according to at least one embodiment of the above-described embodiments may be omitted or may be substituted with the operation of the processor described according to another embodiment.

The control of the screen based on the angle change according to the disclosure may provide an instinctive sense by reflecting the change of the depth of field based on the angle change beyond a simple fun element. For example, the disclosure may provide React-animation, Animated-affordance, or Micro-animation. React-animation may provide an immediate visual feedback and an interesting experience by providing an animation for each user state. Animated-affordance may provide an affordance factor which induces a user next behavior to help usability. Micro-animation may provide a pleasant user experience by expanding an icon animation factor in an App (or application). The disclosure may maximize an animation effect by reflecting at least one of a change of the depth of field, a zoom ratio change, and the change of the sequence of layers in the z-axis, based on a physical angle change.

According to an embodiment of various embodiments described above, an electronic device may include a first housing and a second housing, a hinge structure to couple the first housing to the second housing, a display at least partially placed on the first housing and the second housing, at least one sensor to sense an angle between the first housing and the second housing, a memory disposed in at least one housing of the first housing or the second housing to store a plurality of contents, and at least one processor operatively connected to the at least one sensor and the memory. The at least one processor may be configured to detect an angle or angle change between the first housing and the second housing, extract a plurality of objects from a specific content among the plurality of contents stored in the memory when the angle or the angle change is equal to or greater than a specific angle, and change a depth of field of at least one object of the plurality of objects extracted, based on the angle or the angle change, such that the at least one object is displayed to be different from a previous display state.

The specific content may be configured to be output on a home screen of the display.

According to an embodiment, the at least one processor may extract a subject object and a background object from the plurality of objects included in the specific content, and variously adjust a depth of field of the background object based on the angle change.

According to an embodiment, the at least one processor may be configured to adjust the background object to have a lower sharpness by increasing the depth of field of the background object, as an included angle between the first housing and the second housing is increased.

According to an embodiment, the at least one processor may be configured to variously adjust a zoom ratio for at least one object of the subject object or the background object based on the angle change.

According to an embodiment, the at least one processor may be configured to substitute the subject object with a subject object extracted from another content, based on the angle change.

According to an embodiment, the at least one processor may be configured to substitute the background object with a background object extracted from another content, based on the angle change.

According to an embodiment, the at least one processor may be configured to extract a subject object, a background object, and a text object corresponding to time information from the plurality of objects included in the specific content.

According to an embodiment, the at least one processor may fix the subject object and the text object and variously adjust a depth of field of the background object, based on the angle change.

According to an embodiment, the at least one processor may control to variously adjust a depth of field of the background object, based on the angle change and change a sequence of displaying a layer including the subject object and a layer including the text object, based on the angle change.

According to an embodiment, the at least one sensor may include an inclination detecting sensor to detect an inclination of the foldable electronic device. The at least one processor may be configured to fix the text object, and display the screen, which is in progress of being output to the display, to be tilted to correspond to the inclination detected by the inclination detecting sensor, and vary a tilting degree of the screen having an equal inclination, depending on a size of an included angle between the first housing and the second housing, in displaying the screen to be tilted.

According to an embodiment, the at least one processor may be configured to select the specific content, which is to be output to the display, from among the plurality of contents, depending on a specific condition, and extract a plurality of objects included in the selected specific content.

According to an embodiment, the at least one processor may be configured to receive at least one content from an external electronic device through a communication circuit, store the at least one content in the memory, select a specific content from the at least one content received and stored in the memory, and separate a plurality of objects included in the selected specific content.

According to an embodiment, the at least one processor may be configured to detect an angle change while the foldable electronic device is changed from a folded state to an unfolded state.

According to an embodiment, the at least one processor may be configured to detect the angle change when the display is in a turn-off state.

According to an embodiment, the foldable electronic device may further include a communication circuit to form a communication channel with an external electronic device, and the at least one processor may be configured to receive the angle change from the external electronic device, and to further adjust depths of field of objects in progress of being output, based on the received angle change.

According to an embodiment, the at least one processor may be configured to transmit a content having the depth of field further adjusted to the external electronic device.

According to an embodiment, the foldable electronic device may further include a communication circuit to form a communication channel with an external electronic device, and the at least one processor may be configured to transmit the angle change to the external electronic device.

According to an embodiment, the foldable electronic device may further include a communication circuit to form a communication channel with an external electronic device, and the at least one processor may be configured to transmit a content including an object having the depth of field changed to the external electronic device.

According to an embodiment, the foldable electronic device may further include a communication circuit to form a communication channel with an external electronic device, and the at least one processor may be configured to change a sequence of layers for the plurality of objects, based on the angle change, and transmit a content including an object having the sequence of the layers changed, and having the depth of field changed, to the external electronic device.

According to an embodiment of the disclosure, a method for providing a screen of a foldable electronic device according to the disclosure may include an operation for detecting an angle and an angle change between a first housing and a second housing of an foldable electronic device, an operation for extracting a plurality of objects from a specific content of the plurality of contents stored in the memory when the angle or the angle change is equal to or greater than a specific angle, and an operation for changing a depth of field of at least one object of the plurality of objects extracted, based on the angle or the angle change, such that the at least one object is displayed to be different from a previous display state.

According to an embodiment, the method for providing the screen may be driven based on at least one processor operation of an electronic device described above.

According to various embodiments disclosed in the disclosure, the electronic device may include various types of devices. The electronic device may include, for example, a portable communication device (e.g., a smartphone), a computer device, a portable multimedia device, a mobile medical appliance, a camera, a wearable device, or a home appliance. The electronic device according to an embodiment of the disclosure should not be limited to the above-mentioned devices.

It should be understood that various embodiments of the disclosure and terms used in the embodiments do not intend to limit technical features disclosed in the disclosure to a specific embodiment disclosed herein; rather, the disclosure should be construed to cover various modifications, equivalents, or alternatives of embodiments of the disclosure. With regard to the description of drawings, similar or related components may be assigned with similar reference numerals. Singular forms of noun corresponding to an item may include one or more items unless the context clearly indicates otherwise. In the disclosure disclosed herein, each of the wordings "A or B", "at least one of A and B", "at least one of A or B", "A, B, or C", "at least one of A, B, and C", or "at least one of A, B, or C", and the like used herein may include any one and all combinations of items arranged together in a relevant wording of the wordings. The expressions, such as "a first", "a second", "the first", or "the second", may be used merely for the purpose of distinguishing a component from another component, but do not limit the corresponding component in other aspect (e.g., the importance or the order). It is to be understood that if a component (e.g., a first component) is referred to, with or without the term "operatively" or "communicatively", as "coupled with," "coupled to," "connected with," or "connected to" the another component (e.g., a second component), it means that the component may be coupled with the another component directly (e.g., wiredly), wirelessly, or via a third component.

The term "module" used in various embodiments of the disclosure may include a unit implemented in hardware, software, or firmware and may be, for example, interchangeably used with the terms "logic", "logical block", "part" and "circuit". The "module" may be an integrated part, a minimum unit of the part, which performs at least one function, or a portion of the minimum unit. For example, according to an embodiment, the "module" may be implemented in the form of an application-specific integrated circuit (ASIC).

Various embodiments of the disclosure may be implemented in the form of software (e.g., the program 140) including at least one instruction stored in a storage medium (e.g., an internal memory 136 or an external memory 138) readable by a machine (e.g., the electronic device 101). For example, the processor (e.g., the processor 120) of a machine (e.g., the electronic device 101) may call at least one instruction of at least one instruction, which is stored, from the storage medium and execute the called instruction. This allows the machine to run to perform at least one function according to the at least one instruction, which is called. The at least one instruction may include a code generated by a compiler or a code executable by an interpreter. The machine-readable storage medium may be provided in the form of non-transitory storage medium. Herein, the term "non-transitory", as used herein, refers to that the storage medium is tangible, but does not include a signal (e.g., an electromagnetic wave). The term "non-transitory" does not differentiate a case where the data is permanently stored in the storage medium from a case where the data is temporally stored in the storage medium.

According to an embodiment, the method according to various embodiments disclosed in the disclosure may be provided to be incorporated in a computer program product. The computer program product may be traded as a product between a seller and a buyer. The computer program product may be distributed in the form of machine-readable storage medium (e.g., a compact disc read only memory (CD-ROM)) or may be directly distributed (e.g., download or upload) online through an application store (e.g., a Play Store^{™}) or between two user devices (e.g., the smartphones). In the case of online distribution, at least a portion of the computer program product may be temporarily stored or generated in a machine-readable storage medium such as a memory of a manufacturer's server, an application store's server, or a relay server.

According to various embodiments, each component (e.g., the module or the program) of the above-described components may include a singular entity or plural entities, and some among the plurality entities may be separately provided in another component. According to various embodiments, at least one component of the above components or operations may be omitted, or one or more components or operations may be added. Alternatively or additionally, a plurality of components (e.g., modules or programs) may be integrated into one component. In this case, the integrated component may perform at least one function of each component of the plurality of components identically or similarly to the at least one function performed by the relevant component of the plurality of components prior to the integration. According to various embodiments, operations performed by a module, a program, or other components may be executed sequentially, in parallel, repeatedly, or in a heuristic manner, or at least one of the operations may be executed in different sequences, omitted, or at least one different operation may be added.

## Claims

1. A foldable electronic device comprising:
a first housing and a second housing;
a hinge structure to couple the first housing to the second housing;
a display at least partially placed on the first housing and the second housing;
at least one sensor configured to sense an angle between the first housing and the second housing;
a memory disposed in at least one housing of the first housing or the second housing to store a plurality of contents; and
at least one processor operatively connected to the at least one sensor and the memory,
wherein the at least one processor is configured to:
detect the angle or change in angle between the first housing and the second housing,
extract a plurality of objects from a specific content of the plurality of contents stored in the memory when the angle or the angle change is equal to or greater than a specific angle, and
change a depth of field of at least one object of the plurality of objects extracted, based on the angle or the angle change, such that the at least one object is displayed to be different from a previous display state.

2. The foldable electronic device of claim 1, wherein the specific content is configured to:
be output on a home screen of the display.

3. The foldable electronic device of claim 2, wherein the at least one processor is configured to:
extract a subject object and a background object from the plurality of objects included in the specific content, and
variously adjust a depth of field of the background object based on the angle change.

4. The foldable electronic device of claim 3, wherein the at least one processor is configured to:
adjust the background object to have a lower sharpness by increasing the depth of field of the background object, based on the angle change between the first housing and the second housing;
variously adjust a zoom ratio for at least one object of the subject object or the background object, based on the angle change;
substitute the subject object with a subject object extracted from another content, based on the angle change; and
substitute the background object with a background object extracted from the other object, based on the angle change.

5. The foldable electronic device of claim 2, wherein the at least one processor is configured to:
extract a subject object, a background object, and a text object corresponding to time information from the plurality of objects included in the specific content.

6. The foldable electronic device of claim 5, wherein the at least one processor is configured to:
variously adjust a depth of field of the background object based on the angle change, while fixing the subject object and the text object.

7. The foldable electronic device of claim 5, wherein the at least one processor is configured to control to:
variously adjust a depth of field of the background object based on the angle change, while changing a sequence for displaying a layer including the subject object and a layer including the text object, based on the angle change.

8. The foldable electronic device of claim 5, wherein the at least one sensor includes:
an inclination detecting sensor to detect an inclination of the foldable electronic device, and
wherein the at least one processor is configured to:
fix the text object, and display the screen, which is in progress of being output to the display, to be tilted to correspond to the inclination detected by the inclination detecting sensor; and
vary a tilting degree of the screen with respect to an equal inclination, depending on a size of an included angle between the first housing and the second housing, in displaying the screen to be tilted.

9. The foldable electronic device of claim 1, wherein the at least one processor is configured to:
select the specific content, which is to be output to the display, from among the plurality of contents, depending on a specific condition, and
extract a plurality of objects included in the selected specific content.

10. The foldable electronic device of claim 1, wherein the at least one processor is configured to:
receive at least one content from the external electronic device through a communication circuit;
store the at least one content in the memory;
select a specific content from the at least one content received and stored in the memory, and
separate a plurality of objects included in the selected specific content.

11. The foldable electronic device of claim 1, wherein the at least one processor is configured to:
detect an angle change while the foldable electronic device is changed from a folded state to an unfolded state.

12. The foldable electronic device of claim 1, wherein the at least one processor is configured to:
detect the angle change when the display is in a turn-off state.

13. The foldable electronic device of claim 1, further comprising:
a communication circuit configured to form a communication channel with an external electronic device,
wherein the at least one processor is configured to:
receive the angle change from an external electronic device, and
additionally adjust a depth of field of objects in progress of being output, based on the received angle information.

14. The foldable electronic device of claim 1, further comprising:
a communication circuit configured to form a communication channel with an external electronic device,
wherein the at least one processor is configured to:
transmit the angle change to the external electronic device, or
transmit a content including an object having the depth of field changed, to the external electronic device.

15. The foldable electronic device of claim 1, further comprising
a communication circuit configured to form a communication channel with an external electronic device,
wherein the at least one processor is configured to:
change a sequence of layers for the plurality of objects, based on the angle change, and
transmit a content including an object having the sequence of the layer changed, and having the depth of field changed, to the external electronic device.
